# EUROPEAN PATENT APPLICATION

(11) **EP 1 770 614 A1**
(43) Date of publication of application: **04.04.2007**
(21) Application number: 05737295.5
(22) Date of filing: 26.04.2005
(51) Int. Cl.: G06Q 10/00

(54) **MONEY TERMINAL PROCESSING SERVER, MONEY TERMINAL PROCESSING METHOD, MONEY TERMINAL, CALCULATION INSTRUCTION INPUT DEVICE, AND PRICE MODIFICATION INFORMATION INPUT DEVICE**

(30) Priority: 27.04.2004 JP 2004130687
(71) Applicant: Bitwallet Inc., Tokyo 141-0032 (JP)
(72) Inventor: YAMADA, Kazuki, BitWallet, Inc., Tokyo 1410032 (JP); YAMADA, Hiroyuki, BitWallet, Inc., Tokyo 1410032 (JP); ITO, Koji, BitWallet, Inc., Tokyo 1410032 (JP); ENAMI, Toshiaki, BitWallet, Inc., Tokyo 1410032 (JP); ARAI, Hisanori, BitWallet, Inc., Tokyo 1410032 (JP)
(74) Representative: Cloughley, Peter Andrew
(86) International application number: PCT/JP2005/007867
(87) International publication number: WO 2005/103975

(57) **Abstract**

An object is to properly perform failure recovery in an electronic money system where on-line terminals and off-line terminals coexist.

For both an electronic money card and a center server, a flag selectable between two values, "transaction in progress" and "transaction completed", is prepared. In the course of processing information between the electronic money card and the center server, the processing is caused to progress while setting their flags on (inverting them from "transaction completed" to "transaction in progress"), or setting them off (resetting them from "transaction in progress" to "transaction completed") in a synchronized manner. If any failure occurs during the processing, the state of the flag at the time of occurrence of the failure is saved in both of them, and therefore based on these states, it is possible to specify the time at which the failure has occurred.

## Description

### BACKGROUND OF THE INVENTION

### 1. Field of the Invention

The present invention relates to a monetary terminal processing server, a monetary terminal processing method, a monetary terminal, an arithmetic instruction input unit and an amount change information input unit, which process electronic money stored in an IC card, for example.

### 2. Description of the Related Art

Following the success of a large-scale practical application test for electronic money (electronic cash) performed in recent years with support from general retailers and consumers, our country is entering the age of electronic money.

In electronic money systems currently in practical use, the amount of a monetary value is stored in an electronic money card implemented with a contactless-type IC card, for example.

The electronic money card includes a CPU (Central Processing Unit), which can be caused to execute an addition or subtraction command inputted thereto (hereinafter, the "arithmetic command"), thereby increasing/decreasing the amount of the monetary value in the card. The monetary value in the card is represented by electronic information called "VALUE".

Business entities that accept electronic money in exchange for providing merchandise/services are registered with an organizer of an electronic money system (hereinafter, the "electronic money center") to become affiliated stores, and they have transaction terminals for accessing electronic money cards. Instead of cash payments, the affiliated stores carry out business transactions by using the transaction terminals to increase/decrease the balance of VALUE in customers' electronic money cards.

The transaction terminals are classified into on-line terminals connected on-line to a server device (a center server) at the electronic money center and off-line terminals connected to the center server by batch processing several times a day.

For example, the on-line terminals are used in a network environment capable of high-speed communication, e.g., broadband communication, whereas the off-line terminals are used where high-speed communication is not available.

When the electronic money systems were first put to practical use, the off-line terminals were used as transaction terminals, but because of the progress of broadband networks, they are now being gradually replaced with the on-line terminals. However, there are still locations where the on-line terminals are difficult to install, and therefore the off·line terminals and the on-line terminals coexist in current electronic money systems.

The on-line terminals serve as a communication interface between electronic money cards and the center server, which allows the center server to transmit predetermined arithmetic instructions to the electronic money cards. The electronic money cards execute the arithmetic instructions to increase/decrease the amount of VALUE therein.

On the other hand, the off-line terminals input arithmetic commands to electronic money cards off-line, thereby increasing/decreasing the amount of VALUE in the cards, and accumulate information concerning the transactions as log data. They are collectively transmitted to the center server by batch processing several times a day.

The electronic money center aggregates information concerning transactions with the on-line terminals and transaction information received from the off-line terminals, and transfers cash to the affiliated stores' bank accounts based on the aggregation results.

In this manner, the electronic money center uses the transaction information to associate transfer of exchangeable values in VALUE with actual cash.

Technologies using the electronic money as such include the following.

Patent Document 1: Japanese Laid-Open Patent Publication No. 2003-141428

In this technology, a monetary value is stored in contactless-type IC cards carried by users, and the value is increased/decreased to circulate electronic money.

### SUMMARY OF THE INVENTION

In the case of the off-line terminal, it is almost not necessary to consider the possibility that any failure might occur while processing the electronic money card because the processing is completed by communication between the off-line terminal and the electronic money card, which takes only a short period of time (e.g., about 0.1 seconds), and in addition, the communication path is short.

In the case of using the on-line terminal, however, it is necessary to consider the possibility that any failure might occur while processing the electronic money card because the electronic money card and the center server communicate with each other, which increases the communication time (e.g., about 1 second), and the communication path is a complicated and long distance one.

In addition, if any failure occurs and an attempt needs to be made to recover therefrom, the balance of VALUE in the electronic money card might become inconsistent with the balance of VALUE recorded in the center server because the on-line terminals and the off-line terminals coexist (although information in the electronic money card is always the latest one, information at the center server is not updated to the latest state until information from all off-line terminals is received), and therefore it is not possible to perform a recovery process based on the balance of VALUE.

Further, from the viewpoint of ensuring users' convenience, it is necessary to construct a recovery system such that, when the balance of VALUE becomes inconsistent between the center server and the electronic money card due to occurrence of a failure and an attempt needs to be made to recover therefrom, modification to the balance of VALUE in the user's electronic money card is at least not a subtraction process (i.e., the balance of VALUE in the electronic money card does not change or addition is made thereto).

Therefore, an object of the present invention is to provide a monetary terminal processing server, a monetary terminal processing method, a monetary terminal, an arithmetic instruction input unit and an amount change information input unit, which are capable of properly performing failure recovery in an electronic money system using on-line terminals.

In order to attain the above object, the invention claimed in claim 1 of the present invention provides a monetary information processing server used in a monetary information processing system composed of a monetary terminal for storing monetary information representing a balance amount of a monetary value as electronic data, executing a predetermined arithmetic instruction to perform an arithmetic process on the balance amount, and storing a terminal flag selectable between an initial state and an inverted state, and the monetary information processing server for communicating with the monetary terminal, the server comprising: balance reception means for receiving the balance amount from the monetary terminal; request acquisition means for acquiring an arithmetic instruction transmission request to the monetary terminal; terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state; arithmetic instruction transmission means for, when the inversion instruction or the reset instruction is transmitted to the monetary terminal, transmitting the arithmetic instruction; server flag setting means for inverting or resetting a server flag in a period since the inversion instruction has been transmitted to the monetary terminal until the terminal flag is confirmed as having been reset; and balance updating means for updating the received balance amount as the server flag is inverted or reset.

The invention claimed in claim 2 provides the monetary terminal processing server according to claim 1, comprising: terminal flag reception means for, when a failure has occurred during communication with the monetary terminal, receiving a state of the terminal flag set in the monetary terminal at the time of occurrence of the failure; and recovery means for determining whether the failure has occurred before or after the arithmetic process has been executed in the monetary terminal, based on the received state of the terminal flag and the server flag set at the time of occurrence of the failure, and performing a recovery process for the failure in accordance with the determination.

The invention claimed in claim 3 provides the monetary terminal processing server according to claim 2, wherein when a subtraction instruction is transmitted as the arithmetic instruction, the balance updating means updates the balance amount after confirming that the subtraction instruction has been executed in the monetary terminal, and when an addition instruction is transmitted as the arithmetic instruction, the arithmetic instruction transmission means transmits the addition instruction after the balance amount has been updated, and wherein when determined that the failure has occurred after the subtraction instruction has been executed in the monetary terminal but before the balance amount is updated, the recovery means performs the recovery process by adding an amount corresponding to the subtraction to the monetary terminal, and when determined that the failure has occurred after the balance amount has been updated but before the addition instruction is executed in the monetary terminal, the recovery means performs the recovery process by adding an amount corresponding to the update to the monetary terminal.

The invention claimed in claim 4 provides a monetary information processing method performed by a monetary information processing server used in a monetary information processing system composed of a monetary terminal for storing monetary information representing a balance amount of a monetary value as electronic data, executing a predetermined arithmetic instruction to perform an arithmetic process on the balance amount, and storing a terminal flag selectable between an initial state and an inverted state, and the monetary information processing server for communicating with the monetary terminal, wherein the monetary information processing server includes balance reception means, request acquisition means, terminal flag setting means, arithmetic instruction transmission means, server flag setting means and balance updating means, and wherein the method comprises: a balance reception step performed by the balance reception means for receiving the balance amount from the monetary terminal; a request acquisition step performed by the request acquisition means for acquiring an arithmetic instruction transmission request to the monetary terminal; a terminal flag setting step performed by the terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state; an arithmetic instruction transmission step performed by the arithmetic instruction transmission means for, when the inversion instruction or the reset instruction is transmitted to the monetary terminal, transmitting the arithmetic instruction; a server flag setting step performed by the server flag setting means for inverting or resetting a server flag in a period since the inversion instruction has been transmitted to the monetary terminal until the terminal flag is confirmed as having been reset; and a balance updating step performed by the balance updating means for updating the received balance amount as the server flag is inverted or reset.

The invention claimed in claim 5 provides a monetary terminal, wherein a monetary terminal processing server of claim 1 transmits an arithmetic instruction, the terminal comprising: monetary information storage means for storing monetary information representing a balance amount of a monetary value as electronic data; arithmetic means for performing an arithmetic process on the balance amount by executing a predetermined arithmetic instruction; terminal flag storage means for holding a terminal flag selectable between an initial state and an inverted state; and flag instruction execution means for executing an inversion instruction transmitted from the monetary terminal processing server to set the stored terminal flag from the initial state to the inverted state, and executing a reset instruction transmitted from the monetary terminal processing server to reset the stored terminal flag from the inverted state to the initial state.

The invention claimed in claim 6 provides an arithmetic instruction input unit for inputting the addition instruction to a monetary terminal of claim 5, comprising: addition amount acquisition means for acquiring an addition amount; addition instruction generation means for generating an addition instruction to add a monetary value equivalent to the acquired addition amount; terminal flag reception means for receiving a terminal flag stored in the terminal flag storage means from the monetary terminal; and addition instruction input means for, when the terminal flag is in an initial state, inputting the generated addition instruction to the monetary terminal, and when the terminal flag is in an inverted state, limiting input of the addition instruction to the monetary terminal.

The invention claimed in claim 7 provides a monetary information processing server used in a monetary information processing system composed of a monetary terminal for storing monetary information representing a balance amount of a monetary value as electronic data, performing an amount change process on the balance amount based on predetermined amount change information, and storing a terminal flag selectable between an initial state and an inverted state, and the monetary information processing server for communicating with the monetary terminal, the server comprising: balance reception means for receiving the balance amount from the monetary terminal; request acquisition means for acquiring an amount change information transmission request to the monetary terminal; terminal flag setting means for transmitting to the monetary terminal an inversion instruction to invert the terminal flag to the inverted state, and after confirming that the terminal flag has been inverted to the inverted state in the monetary terminal, transmitting a reset instruction to reset the terminal flag to the initial state; amount change information transmission means for, when the inversion instruction or the reset instruction is transmitted to the monetary terminal, transmitting amount change information requested by the acquired transmission request; server flag setting means for inverting or resetting a server flag in a period since the inversion instruction has been transmitted to the monetary terminal until the terminal flag is confirmed as having been reset; and balance updating means for updating the received balance amount as the server flag is inverted or reset.

The invention claimed in claim 8 provides the monetary terminal processing server according to claim 7, comprising: terminal flag reception means for, when a failure has occurred during communication with the monetary terminal, receiving a state of the terminal flag set in the monetary terminal at the time of occurrence of the failure; and recovery means for determining whether the failure has occurred before or after the amount change process has been executed in the monetary terminal, based on the received state of the terminal flag and the server flag set at the time of occurrence of the failure, and performing a recovery process for the failure in accordance with the determination.

The invention claimed in claim 9 provides the monetary terminal processing server according to claim 8, wherein when amount change information for decrease is transmitted as the amount change information, the balance updating means updates the balance amount after confirming that the amount change process has been executed in the monetary terminal, and when amount change information for addition is transmitted as the amount change information, the amount change information transmission means transmits the amount change information after the balance amount has been updated, and wherein when determined that a failure has occurred after an amount change process for decrease has been executed in the monetary terminal but before the balance amount is updated, the recovery means performs the recovery process by adding an amount corresponding to the decrease to the monetary terminal, and when determined that a failure has occurred after the balance amount has been updated but before an amount change process for increase is executed in the monetary terminal, the recovery means performs the recovery process by adding an amount corresponding to the update to the monetary terminal.

The invention claimed in claim 10 provides an information processing method performed by a monetary information processing server used in a monetary information processing system composed of a monetary terminal for storing monetary information representing a balance amount of a monetary value as electronic data, performing an amount change process on the balance amount based on predetermined amount change information, and storing a terminal flag selectable between an initial state and an inverted state, and the monetary information processing server for communicating with the monetary terminal, wherein the monetary information processing server includes balance reception means, request acquisition means, terminal flag setting means, amount change information transmission means, server flag setting means and balance updating means, and wherein the method comprises: a balance reception step performed by the balance reception means for receiving the balance amount from the monetary terminal; a request acquisition step performed by the request acquisition means for acquiring amount change information transmission request to the monetary terminal; a terminal flag setting step performed by the terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state; an amount change information transmission step performed by the amount change information transmission means for, when the inversion instruction or the reset instruction is transmitted to the monetary terminal, transmitting amount change information requested by the acquired transmission request; a server flag setting step performed by the server flag setting means for inverting or resetting a server flag in a period since the inversion instruction has been transmitted to the monetary terminal until the terminal flag is confirmed as having been reset; and a balance updating step performed by the balance updating means for updating the received balance amount as the server flag is inverted or reset.

The invention claimed in claim 11 provides a monetary terminal, wherein a monetary terminal processing server of claim 7 transmits amount change information, the terminal comprising: monetary information storage means for storing monetary information representing a balance amount of a monetary value as electronic data; amount change means for performing an amount change process on the balance amount based on predetermined amount change information; terminal flag storage means for holding a terminal flag selectable between an initial state and an inverted state; and flag instruction execution means for executing an inversion instruction transmitted from the monetary terminal processing server to set the stored terminal flag from the initial state to the inverted state, and executing a reset instruction transmitted from the monetary terminal processing server to reset the stored terminal flag from the inverted state to the initial state.

The invention claimed in claim 12 provides an amount change information input unit for inputting amount change information for increasing the balance amount to a monetary terminal of claim 11, comprising: increase amount acquisition means for acquiring an increase amount; amount change information generation means for generating amount change information for increasing a monetary value by the acquired increase amount; terminal flag reception means for receiving a terminal flag stored in the terminal flag storage means from the monetary terminal; and amount change information input means for, when the terminal flag is in an initial state, inputting the generated amount change information to the monetary terminal, and when the terminal flag is in an inverted state, limiting input of the amount change information to the monetary terminal.

According to the present invention, it is possible to properly perform failure recovery in an electronic money system in which on-line terminals and off-line terminals coexist.

### BRIEF DESCRIPTION OF THE DRAWINGS

FIG. 1 is a diagram for explaining the outline of a flag setting procedure.
FIG. 2 is a block diagram illustrating a configuration of an electronic money system.
FIG. 3 is a block diagram illustrating a hardware configuration of an electronic money card.
FIG. 4 is a block diagram illustrating a hardware configuration of a center server.
FIG. 5 is a diagram illustrating an example of transaction information.
FIG. 6 is a flowchart for explaining a payment process procedure.
FIG. 7 is a flowchart for explaining a process procedure for the case where failure 1 has occurred.
FIG. 8 is a flowchart for explaining a process procedure for cases where failures 2 and 3 have occurred.
FIG. 9 is a flowchart for explaining a recovery process procedure for the case where failure 2 has occurred.
FIG. 10 is a flowchart for explaining a recovery process procedure for the case where failure 3 has occurred.
FIG. 11 is a flowchart for explaining a process procedure for cases where failures 4 and 5 have occurred.
FIG. 12 is a flowchart for explaining a recovery process procedure for the case where failure 4 has occurred.
FIG. 13 is a flowchart for explaining a recovery process procedure for the case where failure 5 has occurred.
FIG. 14 is a flowchart for explaining a crediting process procedure.
FIG. 15 is a flowchart for explaining a process procedure for the case where failure 6 has occurred.
FIG. 16 is a flowchart for explaining a process procedure for cases where failures 7 and 8 have occurred.
FIG. 17 is a flowchart for explaining a recovery process procedure for the case where failure 7 has occurred.
FIG. 18 is a flowchart for explaining a recovery process procedure for the case where failure 8 has occurred.
FIG. 19 is a flowchart for explaining a process procedure for cases where failures 9 and 10 have occurred.
FIG. 20 is a flowchart for explaining a recovery process procedure for the case where failure 9 has occurred.
FIG. 21 is a flowchart for explaining a procedure for crediting an electronic money card by an off-line terminal.
FIG. 22 is a diagram for explaining screens displayed on an on-line terminal.
FIG. 23 is a diagram for explaining conditions required for performing failure recovery.

### DESCRIPTION OF THE PREFERRED EMBODIMENTS

### [Summary of the Embodiment]

For both the electronic money card and the center server, a flag selectable between two values, "transaction in progress" and "transaction completed", is prepared.

In the course of processing information between the electronic money card and the center server, the processing is caused to progress while setting their flags on (inverting them from "transaction completed" to "transaction in progress"), or setting them off (resetting them from "transaction in progress" to "transaction completed") in a synchronized manner.

If any failure occurs during the processing, the state of the flag at the time of occurrence of the failure is saved in both of them, and therefore based on the state, it is possible to identify the time of occurrence of the failure.

A recovery process is then carried out in accordance with the identified time.

In addition, by setting the temporal order of the time to perform an arithmetic process in the electronic money card and the time to update the record of balance on the center server side so as to vary between subtraction and addition processes, at least it is made possible that a recovery process for the electronic money card is an addition process.

Specifically, in the case of performing a subtraction process in the electronic money card, a subtraction process is performed on the record of balance in the center server after the subtraction process is performed in the electronic money card, and in the case of performing an addition process in the electronic money card, on the contrary, an addition process is performed on the center server side first, and thereafter the addition process is performed on the record of balance in the electronic money card.

With such a configuration, when any failure has occurred after an subtraction process has been executed in the electronic money card but before a subtraction process is performed on the record of balance in the center server, it is possible to recover the balance to the state it was in before the subtraction process by adding the amount that has been subtracted to the electronic money card, whereas when any failure has occurred after an addition process has been performed on the record of balance in the center server but before an addition process is performed in the electronic money card, it is possible to achieve consistency between them by causing the electronic money card to perform an addition process.

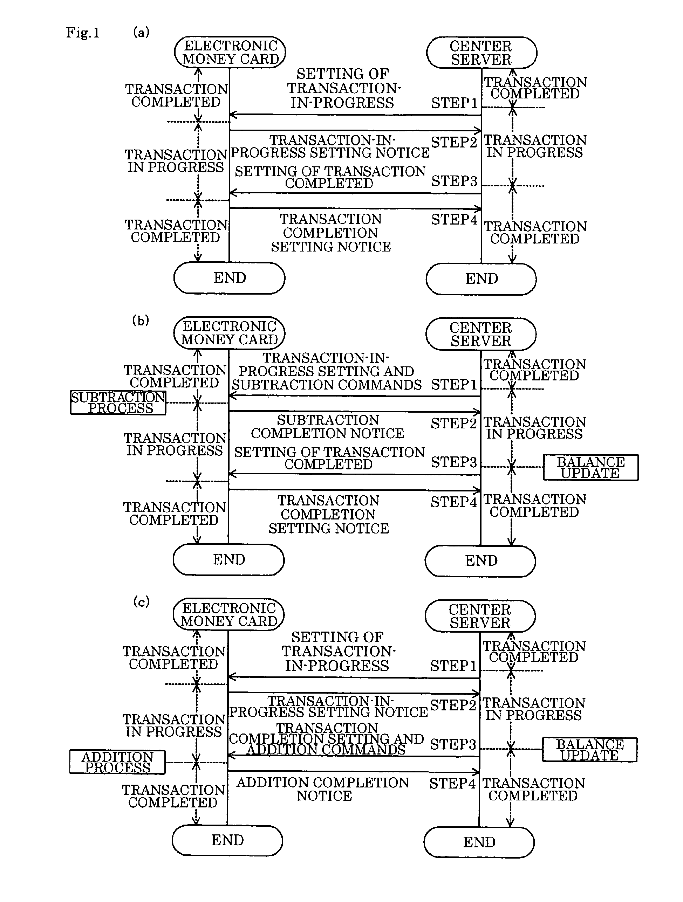

Referring to FIG. 1(a), the outline of the procedure for setting a flag in accordance with an example is described.

First, in the center server, a center-side flag that is set at transaction completed (an initial state) is set to transaction in progress (an inverted state), and thereafter a transaction-in-progress command (an inversion instruction) is transmitted to an electronic money card (step 1).

The electronic money card receives and executes the transaction-in-progress command, and sets a terminal flag (a card-side flag) to transaction in progress. Then, it transmits a transaction-in-progress setting notice to the center server (step 2).

The center server receives the transaction-in-progress setting notice, and thereafter sets the server flag from transaction in progress to transaction completed. Thereafter, it transmits a transaction completion command (a reset instruction) to the electronic money card (step 3).

The electronic money card receives and executes the transaction completion command from the center server, and sets the terminal flag to transaction completed. Thereafter, it transmits a transaction completion setting notice to the center server (step 4). The center server receives it.

In the case of using the thus-set flags, when any failure has occurred in any of steps 1 to 4, it is possible to identify in which step the failure has occurred based on a combination of the flags.

For example, if the terminal flag is "transaction in progress" and the server flag is also "transaction in progress", the failure has occurred in step 2.

In addition, if the terminal flag is "transaction in progress" and the server flag is "transaction completed", the failure has occurred in step 3.

Similarly, if the failure has occurred in step 1, the terminal flag is "transaction completed" and the server flag is "transaction in progress", and if the failure has occurred in step 4, the terminal flag and the server flag are both "transaction completed".

That is, there are four types of flag combinations in total, and these are associated with the steps.

By configuring the center server to transmit both a command to set a flag (a transaction-in-progress command or a transaction completion command) and an arithmetic command to the electronic money card and configuring the electronic money card to perform both setting of the flag and execution of an arithmetic operation, it is made possible to update information on the electronic money card side and information on the center server side in a synchronized manner.

For example, in the case of performing a subtraction process in the electronic money card, a transaction-in-progress command and a subtraction command are transmitted in step 1 as shown in FIG. 1(b). The electronic money card receives and executes the subtraction command, and thereafter transmits a subtraction completion notice (which also serves as a transaction-in-progress setting notice) to the center server in step 2.

The center server receives the subtraction completion notice from the electronic money card, and thereafter performs subtraction from the record of balance for the electronic money card. Thereafter, processing in steps 3 and 4 is performed.

In the above procedure, the case where the balance of VALUE in the electronic money card becomes inconsistent with the record of balance in the center server is when a communication failure has occurred in step 2. Specifically, if the terminal flag and the server flag are both "transaction in progress", then it can be appreciated that a subtraction process has been performed in the electronic money card but no subtraction process has been performed on the record of balance on the center server side.

Accordingly, in the case where any failure has occurred during the subtraction process, when the terminal flag and the server flag are both "transaction in progress", it is possible to recover the state before the subtraction process by transmitting an addition command to add the amount that has been subtracted and causing the electronic money card to execute it.

Similarly, in the case of performing an addition process in the electronic money card, as shown in FIG. 1(c), the processing in steps 1 and 2 is performed, and thereafter a transaction completion command and an addition command are transmitted in step 3. The electronic money card receives and executes the addition command, and thereafter transmits an addition completion notice (which also serves as a transaction completion setting notice) to the center server in step 4.

In the above procedure, the case where the balance in the electronic money card becomes inconsistent with the record of balance in the center server is when a communication failure has occurred in step 3. Specifically, if the terminal flag is "transaction in progress" and the server flag is "transaction completed", then it can be appreciated that an addition process has been performed on the record of balance on the center server side, but no addition process has been performed in the electronic money card.

Accordingly, in the case where any failure has occurred during the addition process, when the terminal flag is "transaction in progress" and the server flag is "transaction completed", it is possible to make recovery to the state after the addition process by transmitting an addition command and causing the electronic money card to execute it.

### [Details of the Embodiment]

In business transaction by electronic money, by increasing/decreasing the value of electronic information called VALUE on which an exchangeable value equivalent to cash is conferred, the exchangeable value is transferred.

VALUE is stored in an electronic money card, which is an IC card with a VALUE processing function, and carried by a user.

Purchase of merchandise/services through use of VALUE can be made at affiliated stores under an agreement on business transaction by VALUE.

The affiliated store have installed therein affiliated store terminals for accessing electronic money cards, and payment (also referred to as "settlement") can be made by subtracting the price from VALUE stored in the users' electronic money cards.

In addition, by paying cash to the affiliated store, it is possible to write VALUE equivalent to the amount of cash to the electronic money card. A process for writing VALUE to the electronic money card as such is called crediting (or charging up).

The affiliated store terminals are classified into on-line terminals connected on-line to a center server in an electronic money center and off-line terminals for collectively transmitting log data to the center server by batch processing.

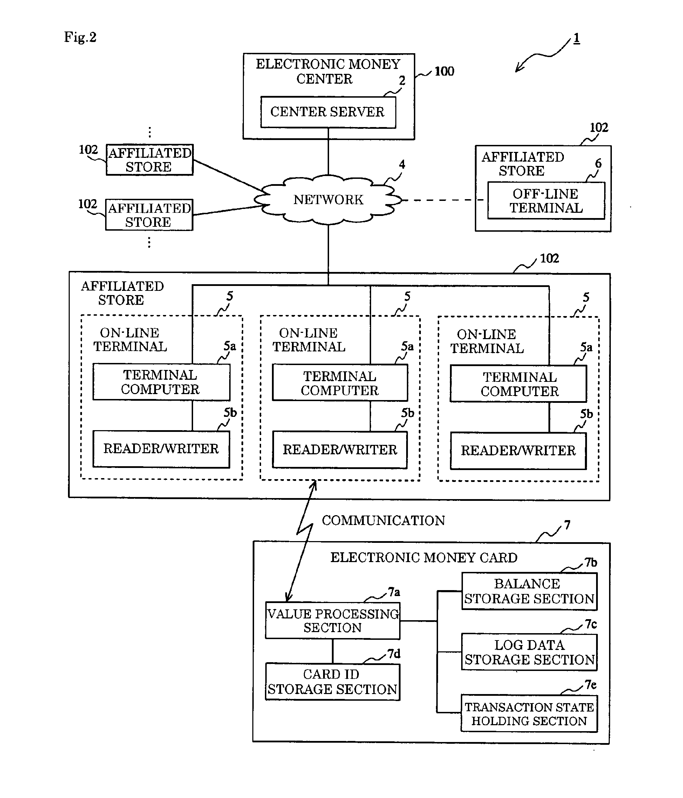

FIG. 2 is a block diagram schematically illustrating the configuration of an electronic money system in the present embodiment.

The electronic money system 1 is composed of a center server 2 installed in an electronic money center 100, on-line terminals 5, 5, 5, ... and off-line terminals 6 installed in affiliated stores 102, a network 4 for networking the on-line terminals 5, 5, 5, ... and the off-line terminals 6, 6, 6, ... with the center server 2, and electronic money cards 7 for performing short-range radio communication with the on-line terminals 5 and the off-line terminals 6.

The electronic money center 100 is a business entity for managing, maintaining and controlling the electronic money system 1, and operates the center server 2 (a monetary terminal processing server).

The center server 2 is constantly connected to the on-line terminals 5, so that it can communicate with the on-line terminals 5 in real time, and generate and transmit arithmetic commands (arithmetic instructions) in accordance with requests from the on-line terminals 5.

Note that although the center server 2 is constantly connected to the on-line terminals 5, 5, 5, ... in the present embodiment, this is not restrictive and for example, it is possible to connect the on-line terminals 5 to the center server 2 as necessary (e.g., at times when it is necessary to input various commands to the electronic money cards 7).

In addition, the center server 2 collectively receives, for example, about once a day pieces of transaction information concerning processes performed on the electronic money cards 7 by the off-line terminals 6.

Furthermore, some off-line terminals 6 are not connected to the network 4, and a person in charge in the electronic money center 100 collects storage media having stored therein pieces of transaction information from the off-line terminals 6, and inputs them to the center server 2.

For example, the affiliated stores 102 are stores such as convenience stores and restaurants in which merchandise or services are provided to customers and VALUE can be used as consideration for the merchandise or services.

The affiliated stores 102 have the on-line terminals 5 and the off-line terminals 6, for example, at their cash desks, and they are used to subtract VALUE equivalent to consideration from customers' electronic money cards 7 for payment. Also, it is possible to receive cash from the customers and credit VALUE equivalent to the amount of cash to their electronic money cards 7.

The present embodiment is based on the assumption that both payment and crediting can be performed with the on-line terminals 5, but it is also possible that only either payment or crediting is performed.

The on-line terminal 5 is composed of a terminal computer 5a and a reader/writer 5b. The terminal computer 5a can be implemented by installing a predetermined computer program into a general-purpose computer provided with the reader/writer 5b or by using a dedicated machine having a dedicated module incorporated therein.

The reader/writer 5b is a peripheral device for the terminal computer 5a, and includes an antenna for short-range radio communication with the electronic money cards 7.

The terminal computer 5a is capable of connecting to an electronic money card 7 via the reader/writer 5b to input an arithmetic command transmitted from the center server 2 to the electronic money card 7.

On the other hand, the off-line terminal 6 by itself generates an arithmetic command and inputs it to the electronic money card 7.

Although not shown in the drawing, the off-line terminal 6 includes the reader/writer 5b, and it processes the electronic money card 7 off-line and thereafter transmits about once a day transaction information containing a record of processing details to the center server 2 over the network 4.

The electronic money card 7 is a monetary terminal implemented by a contactless-type IC card having a VALUE processing function incorporated therein.

The electronic money card 7 includes an IC chip for performing the VALUE processing function and an antenna for radio communication with the reader/writer 5b.

The electronic money card 7 has stored therein a balance amount of VALUE, and executes an addition or subtraction command inputted by the reader/writer 5b to perform addition to/subtraction from the amount of VALUE.

FIG. 2 also shows a functional configuration of the electronic money card 7, and as shown, the electronic money card 7 includes a VALUE processing section 7a, a balance storage section 7b, a log data storage section 7c, a card ID storage section 7d, and a transaction state holding section 7e.

The balance storage section 7b is a storage section for storing the balance of VALUE. Upon payment or crediting, the amount of VALUE stored in the balance storage section 7b is increased or decreased. The balance storage section 7b constitutes a monetary information storage means for storing the amount of a monetary value as electronic data (VALUE).

The log data storage section 7c is a storage section for storing a transaction history as log data. Examples of the transaction history include the date and time of transaction, ID information concerning an affiliated store terminal that has performed the transaction, classification as payment or crediting and the amount of transaction.

For example, up to six transaction histories can be stored, and they are sequentially erased from the oldest one.

The card ID storage section 7d is a storage section having a card ID stored therein. The card ID is ID information uniquely assigned to the electronic money card 7 within the electronic money system 1, and the electronic money center 100 can identify the electronic money card 7 by the card ID. Note that the card ID is assigned to the electronic money card 7 by the electronic money center 100, but in addition to this, ID information assigned to the electronic money card 7 by the manufacturer of the electronic money card 7 may be used.

Any of the ID information is stored in the electronic money card 7, and the ID information can be read by inputting a card ID command to the electronic money card 7.

The transaction state holding section 7e is a storage section for storing a transaction state. The transaction state is flag information indicating whether or not processing on the side of the electronic money card 7 has been completed, and it constitutes a terminal flag.

The transaction state selectively takes two value, "transaction in progress" (corresponding to the inverted state) and "transaction completed" (corresponding to the initial state). Here, the transaction state holding section 7e constitutes a terminal flag storage means.

The transaction state is set at "transaction in progress" until processing in the electronic money card 7 is completed, and it is reset to "transaction completed" upon completion of the processing.

Setting of "transaction in progress" and "transaction completed" is performed by the VALUE processing section 7a, as described later, executing a transaction-in-progress command (corresponding to the inversion instruction) and a transaction completion command (corresponding to the reset instruction), which are transmitted from the center server 2. Here, the VALUE processing section 7a corresponds to a flag instruction execution means.

The transaction state stored in the transaction state holding section 7e is used for determining the time of occurrence of a failure in communication between the center server 2 and the electronic money card 7.

The VALUE processing section 7a is an arithmetic processing section for executing various commands inputted by the reader/writer 5b, and it constitutes an arithmetic means.

When the VALUE processing section 7a receives an input of an addition command or a subtraction command, it adds/subtracts the amount attached as a parameter to the command to/from VALUE in the balance storage section 7b.

When information processing is performed, the VALUE processing section 7a updates the transaction history in the log data storage section 7c.

In the electronic money card 7 in the present embodiment, the electronic money card 7 communicates with the center server 2 via a path composed of the network 4, the terminal computer 5a and the reader/writer 5b, and the electronic money card 7 has encryption and decryption functions because the communication is encrypted.

The network 4 is implemented by, for example, the Internet, and mediates communication between the center server 2 and the on-line terminals 5 as well as communication between the center server 2 and the off-line terminals 6.

The network 4 may be implemented by a WAN (Wide Area Network) or a LAN (Local Area Network), and a communication link based on satellite communication, a telephone network and an optical cable network can also be used.

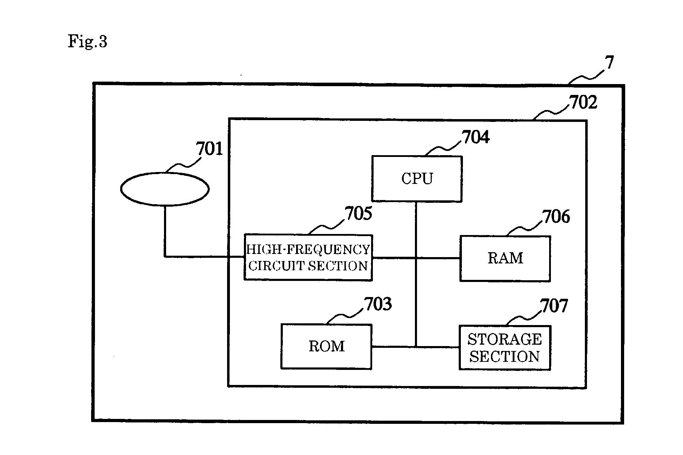

FIG. 3 is a block diagram schematically illustrating an exemplary hardware configuration of the electronic money card 7.

The electronic money card 7 is a plastic card including an antenna 701 and an IC chip 702.

In the present embodiment, a contactless-type IC card is used as the electronic money card 7, which also can be implemented by a contact-type IC card. In such a case, the electronic money card 7 has a contact interface for accessing the IC chip 702 in place of the antenna 701. The affiliated store terminal also has an interface for connecting with the contact interface, and the electronic money card 7 and the affiliated store terminal communicate through the interfaces.

The antenna 701 is an element for radio communication with the antenna included in the reader/writer 5b.

The antenna 701 receives radio waves emitted from the reader/writer 5b, and emits radio waves toward the reader/writer 5b.

In addition, the antenna 701 has a power generation function for generating power to drive the IC chip 702 by receiving power supply from the reader/writer 5b by radio.

The IC chip 702 is a kind of computer including elements such as a ROM (Read Only Memory) 703, a CPU (Central Processing Unit) 704, a high-frequency circuit section 705, a RAM (Random Access Memory) 706 and a storage section 707. These elements are formed within a single IC chip.

The CPU 704 is a central processing unit for processing information in accordance with various programs and controlling the operation of the entire electronic money card 7.

The ROM 703 is a read-only memory having stored therein basic programs (an OS (Operating System), a program for communicating with the reader/writer 5b, etc.) and a variety of types of data.

The high-frequency circuit section 705 is an interface for communicating with the reader/writer 5b via the antenna 701. The CPU 704 is capable of radio communication with the reader/writer 5b via the high-frequency circuit section 705.

The RAM 706 is a readable/writable volatile memory, which provides a working area for the CPU 704 to process various types of information. In the present embodiment, it is used, for example, when the CPU 704 executes an addition or subtraction command to increase/decrease the amount of VALUE.

The storage section 707 is implemented by, for example, an EEPROM (Electrically Erasable and Programmable ROM), which is a non-volatile memory to/from which the CPU 704 can write/read information.

It is possible to store (install) a variety of types of application software in the storage section 707 and cause the CPU 704 to execute them so that the electronic money card 7 can exercise various functions.

In the present embodiment, a VALUE processing program, which is a program for causing the CPU 704 to function as an electronic money card 7, is stored.

In addition to having stored the VALUE processing program, the storage section 707 has formed therein the balance storage section 7b, the log data storage section 7c, the card ID storage section 7d and the transaction state holding section 7e.

When the electronic money card 7 is driven by placing it in close contact with the reader/writer 5b, the CPU 704 executes the VALUE processing program to implement the VALUE processing section 7a in the form of software. As a result, it is made possible to access the balance storage section 7b, the log data storage section 7c, the card ID storage section 7d and the transaction state holding section 7e to process a variety of types of information.

Note that recent years have seen attempts to provide the IC chip 702 in mobile terminals such as cell phones to allow the mobile terminals to have the function as a contactless-type IC card.

In this usage pattern, the IC chip 702 and the antenna 701 are provided in the mobile terminals to enable wireless access from the reader/writer 5b as in the case of the electronic money card 7, and in addition, it is possible to allow a display device provided in the mobile terminals to display information in the IC chip 702 or it is possible to input information to the IC chip 702 via input devices of the mobile terminals.

Hereinbelow, the present embodiment will be described with respect to the electronic money card 7, but the mobile terminals including the IC chip 702 can also be used.

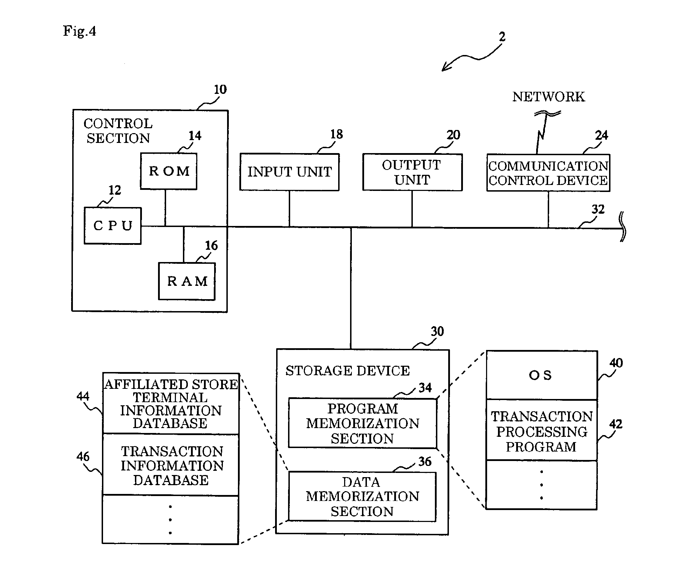

FIG. 4 is a block diagram schematically illustrating a hardware configuration of the center server 2. The center server 2 is composed of a control section 10 connected via a bus line 32 to an input unit 18, an output unit 20, a communication control device 24 and a storage device 30.

The control section 10 is composed of a CPU 12, a ROM 14 and a RAM 16.

The CPU 12 is a central processing unit for loading and executing programs stored in the ROM 14, the storage device 30 and other devices. In the present embodiment, it executes a transaction processing program stored in the storage device 30, and exercises the function as a center server 2.

The ROM 14 is a read-only non-volatile memory having memorized therein, for example, a variety of types of programs, data and parameters for performing basic control to allow the CPU 12 to function. The programs in the ROM 14 are executed, for example, when the center server 2 is activated.

The RAM 16 is a readable/writable memory used as a working memory for the CPU12, which is used, for example, when executing the transaction processing program.

The input unit 18 is composed of, for example, input devices such as a keyboard and a mouse.

The output unit 20 is composed of, for example, a display device implemented by a display and a printing device implemented by a printer.

The operator of the electronic money center 100 can access the center server 2 by using the input unit 18 and the output unit 20, and perform maintenance work, program updating and other work.

The communication control device 24 is a device for connecting the center server 2 to the network 4, which is implemented by a modem, a terminal adaptor or other connection devices.

The communication control device 24 is controlled by the CPU 12 to transmit/receive data and other information to/from the affiliated store terminal in accordance with a predetermined protocol.

In the case where the affiliated store terminal is the on-line terminal 5, it is constantly connected, whereas in the case of the off-line terminal 6, connection with the off-line terminal 6 is accepted when the off-line terminal 6 performs batch processing.

The storage device 30 is composed of a readable/writable storage medium and a drive unit for reading/writing a program or data from/to the storage medium. The storage medium is mainly implemented by a hard disk, but other readable/writable storage media such as a magneto-optical disk, a magnetic disk and a semiconductor memory may be used.

The storage device 30 has formed therein a program memorization section 34 having various programs stored therein and a data memorization section 36 having a variety of types of data stored therein.

Programs such as an OS 40, a transaction processing program 42, ... are installed in the program memorization section 34.

The OS 40 is a program for implementing basic functions for operating the center server 2, e.g., inputting/outputting of files and control of the communication control device 24.

The transaction processing program 42 is a program for causing the center server 2 to communicating with the electronic money card 7 via the on-line terminal 5 to perform, for example, the following processes.
(1) Payment process
   This is a process for making settlement by using VALUE stored in the electronic money card 7 as payment tender, e.g., payment for merchandise.
   In this case, the center server 2 transmits a subtraction command requested by the on-line terminal 5 to the electronic money card 7, and causes the electronic money card 7 to execute it.
   At this time, the process progresses with two flags set for the transaction state of the electronic money card 7 and the transaction state of the center server 2.
(2) Crediting process
   This is intended to credit the electronic money card 7 to increase the balance of VALUE.
   In this case, the center server 2 transmits an addition command requested by the on-line terminal 5 to the electronic money card 7, and causes the electronic money card 7 to execute it.
   In this case also, the process progresses with two flags set for the transaction state of the electronic money card 7 and the transaction state of the center server 2.
   As such, the center server 2 includes an arithmetic instruction transmission means for transmitting an arithmetic command (an arithmetic instruction).
(3) Balance confirmation process
   This is intended to present the balance of VALUE stored in the electronic money card 7.
   In this case, the center server 2 generates and transmits a balance confirmation command to the electronic money card 7, and causes the electronic money card 7 to execute it. Then, the electronic money card 7 transmits the balance of VALUE to the center server 2, and the center server 2 causes the on-line terminal 5 to display it.
   It is also possible that the on-line terminal 5 inputs the balance confirmation command to the electronic money card 7, and in response to this, the electronic money card 7 returns the balance of VALUE, which is displayed by the on-line terminal 5.
(4) Recovery process after failure occurrence
   This is intended to perform a process for recovering from a failure that has occurred to interrupt processing when the center server 2 and the electronic money card 7 are in communication with each other.

The center server 2 determines the time at which the failure has occurred based on setting statuses of the transaction states of the center server 2 and the electronic money card 7, and performs a recovery process in accordance with the time.

Before performing the payment process, the crediting process and the balance confirmation process, the center server 2 checks whether or not any failure has occurred in the last processing session based on the transaction states of the center server 2 and the electronic money card 7, and if there has been any failure, recovery therefrom is made to continue the processing. As such, the center server 2 includes a recovery means.

The data memorization section 36 is described next.

The data memorization section 36 has stored therein a variety of types of data required for operating the center server 2, and an affiliated store terminal information database 44, a transaction information database 46, ... are stored therein.

The affiliated store terminal information database 44 is a database having stored therein information concerning on-line terminals 5 and off-line terminals 6 installed in each affiliated store 102.

For example, the affiliated store terminal information database 44 has stored therein information such as affiliated store ID, terminal ID, serial ID, ..., the affiliated store ID being ID information concerning affiliated stores 102 having affiliated store terminals installed therein, the terminal ID being ID information set for on-line terminals 5 and off-line terminals 6 within the affiliated store 102, the serial ID being ID information uniquely assigned to the on-line terminals 5 and the off-line terminals 6 within the electronic money system 1.

When the center server 2 receives a serial ID from an affiliated store 102, it can identify the on-line terminal 5 or off-line terminal 6 that is associated therewith, and moreover it can identify the affiliated store 102.

The reason for assigning two types of ID information, i.e., the terminal ID and the serial ID, to identify the on-line terminal 5 and the off-line terminal 6 is to provide convenience to the affiliated store 102. Specifically, the terminal IDs are pieces of information, which are set such as 01, 02, ..., for example, in order of installation of affiliated store terminals and therefore readily recognized by the affiliated store 102, so that the affiliated store 102 can perform management therewithin, or make inquiries at the time of malfunction, based on the terminal IDs.

The transaction information database 46 is a database for accumulating as histories information concerning transactions performed on the electronic money card 7 via the on-line terminal 5 and the off-line terminal 6.

The transaction information is log data generated when the electronic money card 7 is processed, and if the electronic money card 7 is processed via the on-line terminal 5, the log data is generated in real-time, whereas if the card is processed by the off-line terminal 6, the log data is temporarily accumulated in the off-line terminal 6 and thereafter transmitted to the center server 2 by batch processing, for example.

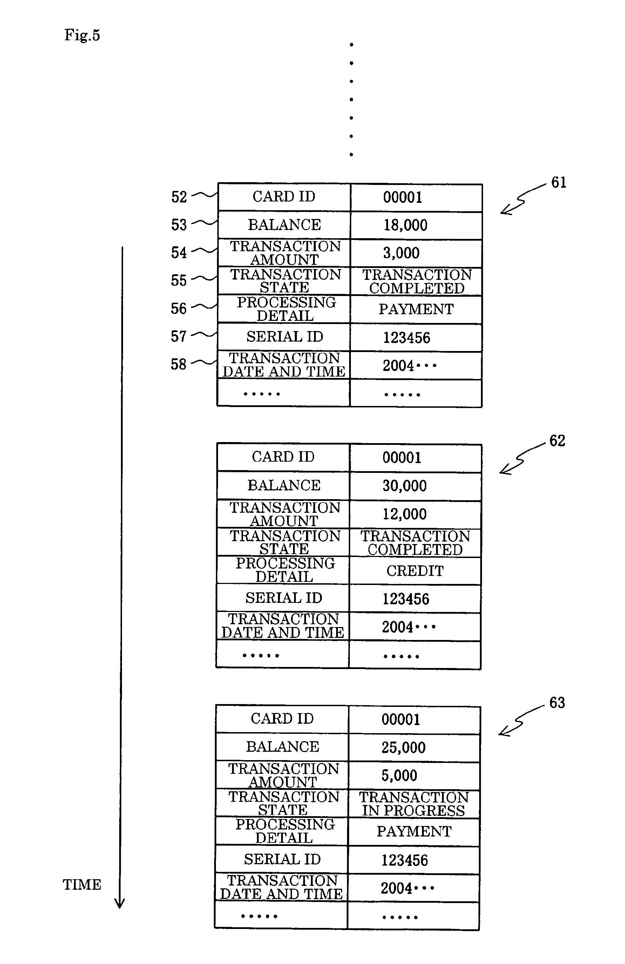

FIG. 5 is a diagram illustrating in chronological order pieces of transaction information 61, 62 and 63 generated when an electronic money card 7 having a card ID of "00001" is processed by the on-line terminal 5. As shown in the drawing, items such as card ID 52, balance 53, transaction amount 54, transaction state 55, processing detail 56, serial ID 57, transaction date and time 58, ... are contained in the transaction information.

The card ID 52 is a card ID received from the electronic money card 7 via the on-line terminal 5.

The balance 53 is a balance of VALUE after an arithmetic process has been performed in the electronic money card 7, and the transaction amount 54 is an amount that has been added or subtracted at the time of the arithmetic operation.

The center server 2 receives the balance of VALUE from the electronic money card 7 at the time of a payment or crediting process (corresponding to a balance reception means), and acquires an arithmetic command transmission request (accompanied by the amount to add or subtract) from the on-line terminal 5 (corresponding to a request acquisition means). The balance 53 is calculated based on these values.

The transaction state 55 is flag information for which either "transaction in progress" (corresponding to the inverted state) or "transaction completed" (corresponding to the initial state) is selectavely set, and it constitutes a server flag.

The transaction state 55 is set to "transaction in progress" when processing on the side of the center server 2 is started, and updated to "transaction completed" when the processing on the side of the center server 2 is completed.

As such, the center server 2 includes a server flag setting means for inverting the transaction state 55 from "transaction completed" to "transaction in progress" or resetting it from "transaction in progress" to "transaction completed".

In the example in FIG. 5, the third transaction information from the top of the drawing contains a transaction state 55 of "transaction in progress", and therefore it can be appreciated that processing concerning the transaction information has not been completed on the side of the center server 2.

The serial ID 57 is a serial number of an on-line terminal 5 that serves as an interface for communicating with the electronic money card 7. The serial number can be checked against the affiliated store terminal information database 44 to identify the affiliated store 102 that has processed the electronic money card 7.

The transaction date and time 58 is a date and time of communication with the on-line terminal 5. For example, a communication start time and a communication finish time are stored.

As shown in FIG. 5, the processing performed on the electronic money card 7 identified by a card ID 52 of "00001" is chronologically recorded as transaction information.

The transaction information is similarly accumulated for electronic money cards 7 associated with other card IDs.

As for processing performed by the on-line terminal 5, the transaction information is recorded to the transaction information database 46 in real-time, but as for processing performed by the off-line terminal 6, there is a time lag between transmission from the off-line terminal 6 by batch processing and recording to the transaction information database 46.

In addition, in the processing by the off-line terminal 6, no failure occurs between the off-line terminal 6 and the electronic money card 7 during the processing, and therefore the item of transaction state 55 is not necessarily provided for the processing by the off-line terminal 6.

While the foregoing description has been given with respect to the center server 2, the hardware configuration of the on-line terminal 5 is basically the same as that of the center server 2.

The on-line terminal 5 includes a display device for presenting information to a person in charge at the affiliated store 102 or customers having an electronic money card 7, and an audio output device for notifying a processing status by audio such as sound effects.

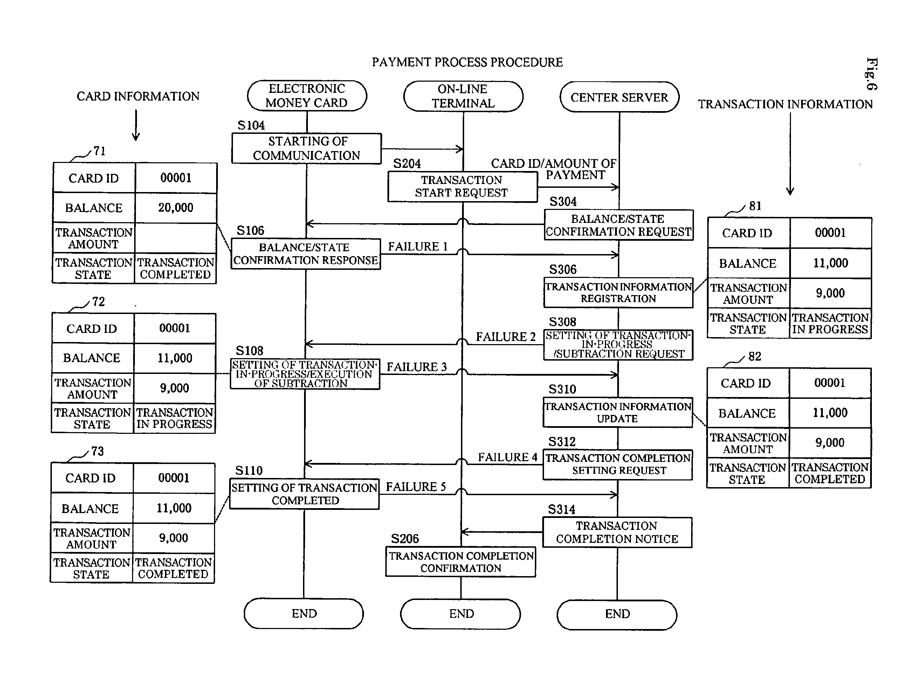

Next, flowcharts in FIGS. 6 through 13 are referenced to describe the procedure for price payment through the use of the electronic money card 7 and recovery procedures for cases where a failure has occurred during payment.

Here, the case where 9,000 yen is paid using an electronic money card 7 charged up with 20,000 yen is described by way of example.

FIG. 6 is a flowchart for explaining the procedure for performing a payment process on the electronic money card 7.

In this flowchart, in order to illustrate how data is updated on the side of the electronic money card 7 and on the side of the center server 2, both card information and transaction information are shown.

The card information shows a logical structure of data held on the side of the electronic money card 7.

The card information contains items such as "card ID", "balance", "transaction amount" and "transaction state".

As values for "card ID", "balance", "transaction amount" and "transaction state", information stored in the VALUE processing section 7a, the balance storage section 7b, the log data storage section 7c and the transaction state holding section 7e can be used respectively.

For example, card information 71 contains a card ID of 00001 and a balance of VALUE of 20,000 yen, and the transaction state is set at "transaction completed".

As for the card information 71, because the transaction state is set at "transaction completed", it can be appreciated that processing on the side of the electronic money card 7 has been completed in the last processing session.

The thus-configured card information and transaction information are referenced to describe the payment process.

First, a customer expresses his/her intension of purchase by presenting merchandise to a person in charge (a shop clerk) at the affiliated store 102.

In response to this, the person in charge uses a barcode reader or the like to read a price of 9,000 yen for the merchandise, and inputs it as the amount of payment to the on-line terminal 5.

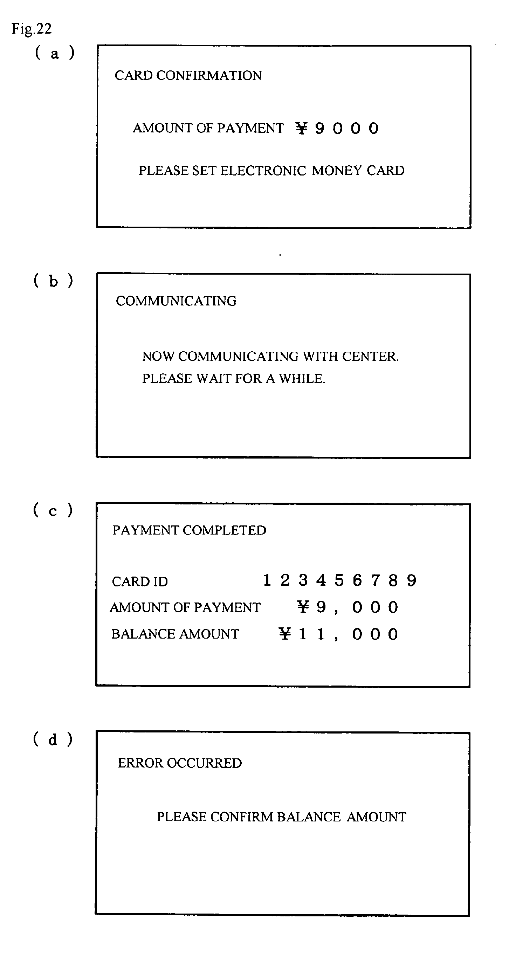

Then, a card confirmation screen as shown in FIG. 22(a) is displayed on a display device of the on-line terminal 5. On the card confirmation screen, the amount of payment is displayed along with an instruction such as "Please set electronic money card", which prompts to set the electronic money card 7 in the reader/writer 5b of the on-line terminal 5.

The customer sets the electronic money card 7 in the on-line terminal 5 in accordance with the instruction on the card confirmation screen.

Referring back to FIG. 6, the electronic money card 7, when set in the on-line terminal 5, is driven by radio waves from the reader/writer 5b, and starts communicating with the on-line terminal 5 (step 104).

When the electronic money card 7 is connected to the on-line terminal 5, the center server 2 becomes capable of communicating with the electronic money card 7.

While the electronic money card 7 and the center server 2 are attempting to communicate with each other, a communicating screen as shown in FIG. 22(b) is displayed on the display device of the on-line terminal 5. As a result, the customer and the person in charge at the affiliated store 102 can recognize that the electronic money card 7 and the center server 2 are attempting to communicate with each other.

Referring back to FIG. 6, when the on-line terminal 5 starts communicating with the electronic money card 7, it reads a card ID from the electronic money card 7, and transmits it to the center server 2 along with the amount of payment (step 204).

Note that the reading of the card ID is performed by the on-line terminal 5 inputting to the electronic money card 7 a card ID command to the electronic money card 7.

In the electronic money card 7, the VALUE processing section 7a executes the card ID command to read the card ID from the card ID storage section 7d, and returns it to the on-line terminal 5.

When the center server 2 receives the above information from the on-line terminal 5, it issues a balance/state confirmation request to the electronic money card 7 (step 304).

This request is intended to request the electronic money card 7 to transmit a balance of VALUE and a transaction state, and is performed by transmitting a command to cause the electronic money card 7 to perform these operations.

The electronic money card 7 receives the balance/state confirmation request from the on-line terminal 5, and provides a balance/state confirmation response (step 106).

This process is performed by the VALUE processing section 7a executing the command transmitted from the on-line terminal 5 and transmitting to the center server 2 the balance of VALUE stored in the balance storage section 7b and the transaction state stored in the transaction state holding section 7e. As such, the center server 2 includes a terminal flag reception means (for receiving the transaction state of the electronic money card 7).

The center server 2 receives the balance of VALUE and the transaction state from the electronic money card 7.

Then, it checks whether or not any failure has occurred in the last transaction by checking the received transaction state and a transaction state of transaction information for the last session stored in the transaction information database 46.

If there has been any failure, recovery from the failure is made by a method as described later. Here, it is assumed that there has been no failure.

After checking transaction information on the sides of the electronic money card 7 and the center server 2, the center server 2 generates transaction information 81 concerning the current processing session and stores it in the transaction information database 46 for registration (step 306).

In the transaction information 81, the card ID and the balance of VALUE received from the electronic money card 7 and the transaction amount inputted by the on-line terminal 5 are contained. Note that other items such as a processing detail, a serial ID, a transaction date and time, ... are omitted in the drawing.

As shown in the drawing, the transaction information 81 contains a card ID of 00001, a post-subtraction balance of 11,000 yen and a transaction amount of 9,000 yen.

Note that at the time of registration, the transaction state of the transaction information 81 is set at "transaction in progress". As such, the transaction state is set to "transaction in progress" when processing on the side of the center server 2 is started. Then, it is set to "transaction completed" when the processing on the side of the center server 2 is completed.

When the transaction state is "transaction in progress", recording of the transaction information to the transaction information database 46 has not necessarily been established, and may be invalidated at the time of failure recovery as described later.

Accordingly, the balance in the transaction information 81 is a post-subtraction value because it is used for failure recovery, and the subtraction process on the side of the center server 2 is completed when the transaction state is set to "transaction completed".

Next, the center server 2 issues a transaction-in-progress subtraction request to the electronic money card 7 (step 308).

This request is performed by transmitting to the electronic money card 7 a transaction-in-progress command and a subtraction command to execute subtraction of the amount of payment.

In the present embodiment, both the subtraction command and the transaction-in-progress command are transmitted in order to associate execution of the subtraction command and updating of the transaction state in the electronic money card 7. Specifically, by confirming that the transaction state has been updated, it is made possible to confirm that the subtraction command has been executed in the electronic money card 7.

For the same reason, both an addition command and a transaction completion command are transmitted to the electronic money card 7 in a crediting process, which will be described later.

The electronic money card 7 receives and executes these commands, and sets the transaction state to "transaction in progress" as well as subtracting the amount of payment from the balance of VALUE. As a result, the card information 71 is updated to card information 72. As shown in the drawing, the card information 72 contains a post-subtraction balance of 11,000 yen, and the transaction state is set at "transaction in progress".

Next, the electronic money card 7 transmits to the center server 2 a subtraction completion notice indicating that the subtraction has been completed and the transaction state has been set to "transaction in progress" (step 108).

When the center server 2 receives the subtraction completion notice from the electronic money card 7, it updates the transaction information 81 to transaction information 82 by setting its transaction state to "transaction completed" (step 310).

As result, the center server 2 completes the subtraction process on the side of the center server 2 and establishes registration of the transaction information 82 with the transaction information database 46.

When the center server 2 has completed the subtraction process on the side of the center server 2, it issues a transaction completion setting request to the electronic money card 7 (step 312). This request is performed by transmitting a transaction completion command to the electronic money card 7.

In response to this, the electronic money card 7 receives and executes the transaction completion command, and sets the transaction state to "transaction completed" (step 110). Specifically, the value of the transaction state is reset from "transaction in progress" to "transaction completed". As a result, the card information is updated as in card information 73.

The electronic money card 7 executes the transaction completion command, and thereafter transmits to the center server 2 a transaction completion notice indicating that the transaction state has been set to "transaction completed".

Upon receipt of the transaction completion notice from the electronic money card 7, the center server 2 transmits to the on-line terminal 5 a transaction completion notice indicating that processing with the electronic money card 7 has been completed (step 314).

The on-line terminal 5 receives the transaction completion notice from the center server 2 to confirm that the process has been completed (step 206).

At this time, the on-line terminal 5 displays a payment completion screen as shown in FIG. 22(c) on the display device, which accompanies sound effects representing success in the process.

On the payment completion screen, the card ID and the amount of payment are displayed along with the balance of VALUE after payment.

In the above-described payment process, the parts where any failure might occur during the communication between the electronic money card 7 and the center server 2 are step 106 (referred to as "failure 1"; the same applies below), step 308 (failure 2), step 108 (failure 3), step 312 (failure 4) and step 110 (failure 5).

Note that although any failure might occur in step 304, processing for this case is the same as that for failure 1, and therefore the description thereof is omitted.

Described below are process procedures for cases where these failures 1 through 5 have occurred and recovery process procedures therefor.

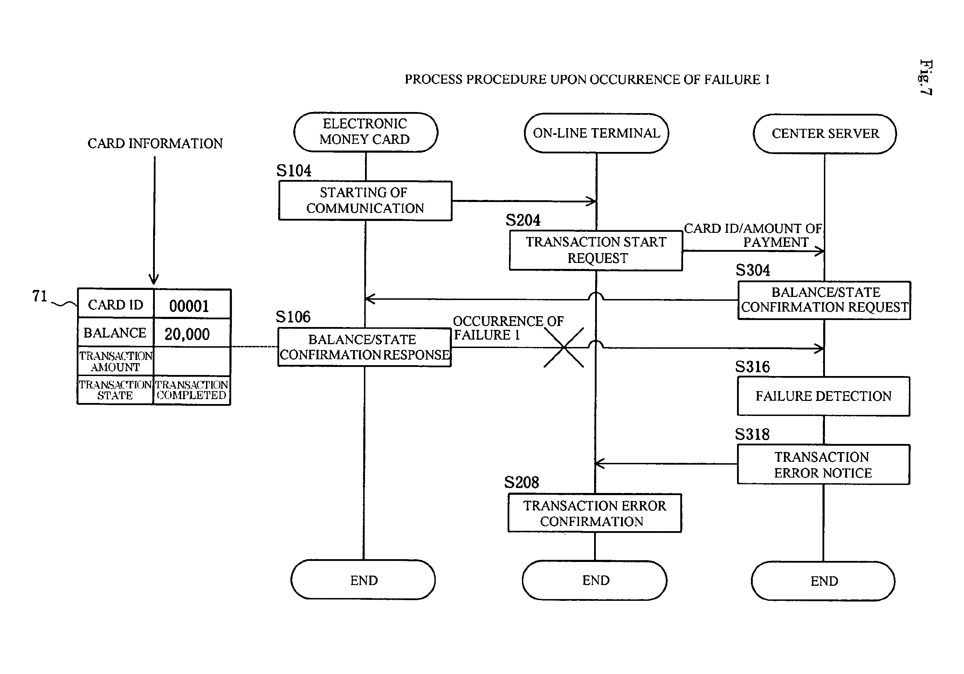

FIG. 7 is a flowchart for explaining a process procedure for the case where failure 1 has occurred. Note that in the following description, steps corresponding to those in the flowchart in FIG. 6 are denoted by the same step numbers for simplification or omission of the description thereof.

First, if failure 1 has occurred when the electronic money card 7 transmits the balance of VALUE and the transaction state to the on-line terminal 5 (step 106), the center server 2 detects failure 1 (step 316).

Here, it is assumed that the electronic money system 1 detects the failure by timeout. Specifically, the center server 2 measures the time up to receiving a response from the electronic money card 7, and if no response is provided within a previously set predetermined period of time, it is determined that any failure has occurred. Note that this is only an example, and the failure may be detected by other methods.

Upon detection of failure 1, the center server 2 transmits to the on-line terminal 5 a transaction error notice indicating that processing has failed (step 318).

The on-line terminal 5 receives the transaction error notice from the center server 2, and confirms that the processing has failed (step 208).

When the on-line terminal 5 has confirmed the processing error, it displays an error occurrence screen as shown in FIG. 22(d), which accompanies sound effects representing a transaction error.

On the error occurrence screen, an instruction to confirm the balance is displayed, and then a person in charge at the affiliated store 102 performs a balance confirmation process for the electronic money card 7.

As such, when any failure has occurred, the electronic money system 1 requests confirmation of the balance, and makes recovery from the failure in accordance with the balance confirmation process.

Specifically, in the balance confirmation process, the center server 2 first checks transaction states on the sides of the center server 2 and the electronic money card 7 to check whether any failure has occurred in the last processing session. If there has been no failure, the balance is confirmed, whereas if there has been any failure, the balance is confirmed after a recovery process is performed.

Note that although omitted in the description regarding FIG. 6, in the payment process or a crediting process described later also, the center server 2 checks whether or not any failure has occurred in the last processing session, and if there has been any failure, recovery therefrom is made to continue the payment process or the crediting process.

Incidentally, when failure 1 has occurred, the card information 71 is left unprocessed, and it is not necessary to perform a recovery process because the transaction information has not yet been registered with the center server 2. Accordingly, when failure 1 has occurred, the balance is confirmed without performing a recovery process. Therefore, the person in charge at the affiliated store 102 confirms the balance and thereafter performs the payment process again from the beginning.

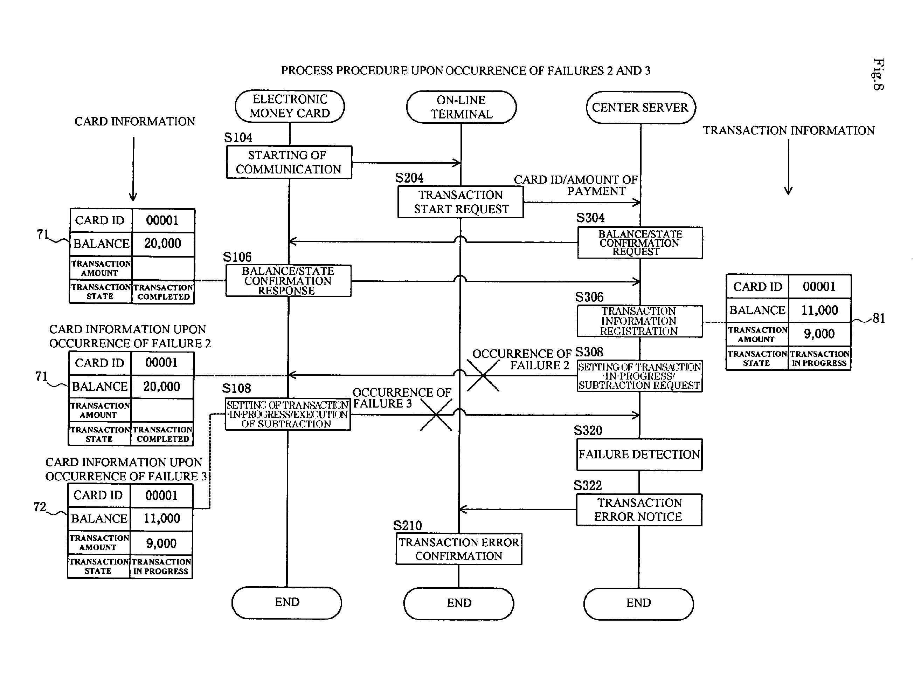

Next, referring to the flowchart in FIG. 8, a process procedure for cases where failures 2 and 3 have occurred is described.

When any failure has occurred in step 308 (failure 2) or step 108 (failure 3), the center server 2 detects it (step 320), and transmits a transaction error notice to the on-line terminal 5 (step 322).

The on-line terminal 5 receives the transaction error notice to confirm the error, and displays an error occurrence screen, which accompanies sound effects (step 210).

Here, which one of these failures 2 and 3 has occurred can be identified based on a combination of the transaction state of the card information and the transaction state of the transaction information.

Specifically, when failure 2 has occurred, the card information is card information 71, whereas when failure 3 has occurred, it is card information 72. In addition, the transaction information is transaction information 81 regardless of failure 2 or 3.

Therefore, the combination of the transaction state of the card information and the transaction state of the transaction information is (transaction completed, transaction in progress) if failure 2 has occurred, and (transaction in progress, transaction in progress) if failure 3 has occurred.

In the following description, a combination of the transaction state of the card information and the transaction state of the transaction information is similarly parenthesized in this order.

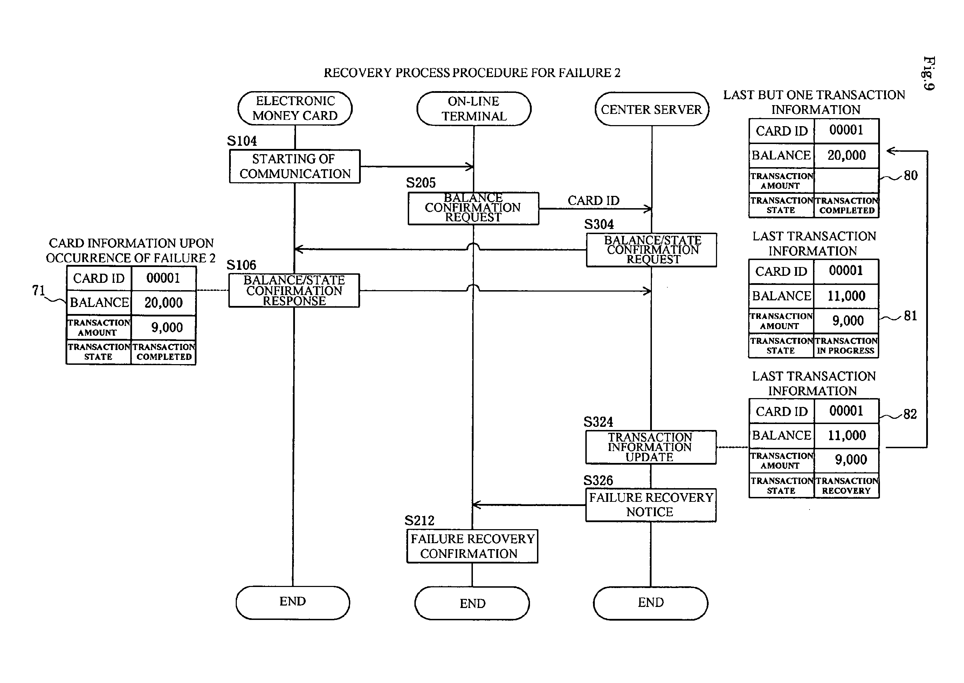

FIG. 9 is a flowchart for explaining a recovery process procedure for the case where failure 2 has occurred.

This process is started by a person in charge at the affiliated store 102 using the on-line terminal 5 to issue a request to confirm the balance of the electronic money card 7 in accordance with an instruction on the error occurrence screen.

The person in charge sets the electronic money card 7 in the reader/writer 5b to start communication between the electronic money card 7 and the on-line terminal 5 (step 104) (note that the electronic money card 7 is normally set in the on-line terminal 5 at the time of failure occurrence, and therefore the balance confirmation process is entered automatically), and issues a balance confirmation request to the center server 2, for example, by depressing a balance confirmation button provided on the on-line terminal 5 (step 205).

The center server 2 receives the balance confirmation request from the on-line terminal 5, and issues a balance/state confirmation request to the electronic money card 7 (step 304), and in response to this, the electronic money card 7 provides a balance/state confirmation response (step 106).

Next, the center server 2 checks a combination of a transaction state transmitted in the balance/state confirmation response from the electronic money card 7 and a transaction state of transaction information 81 for the last session.

The result is that the combination of the transaction states is (transaction completed, transaction in progress), and because the last processing session was a payment process (which is recorded in the transaction information 81, though not shown in the drawing), the center server 2 determines that the last processing session has been interrupted by failure 2.

If failure 2 has occurred, the center server 2 performs state recovery by setting the transaction state of the transaction information 81 to "transaction recovery".

The center server 2 is configured to consider any transaction information having its transaction state set at "transaction recovery" as invalid, and therefore transaction information 80 for the last but one session is the latest transaction information for the electronic money card 7.

In other words, the center server 2 performs failure recovery by updating the transaction information 81 for the last session to the transaction information 80 for the last but one session (step 324).

After updating the transaction information, the center server 2 transmits to the on-line terminal 5 a failure recovery notice indicating that failure recovery has been performed (step 326). The on-line terminal 5 receives it and confirms that recovery from the failure has been made (step 212).

Note that in the present embodiment, as the failure recovery notice, the balance of VALUE in the electronic money card 7 is transmitted, and the on-line terminal 5 displays the balance of VALUE. That is, the failure recovery is performed along with the confirmation of the balance.

Then, the person in charge at the affiliated store 102 confirms the balance, and thereafter performs the payment process again from the beginning.

As such, when failure 2 has occurred, the card information is left unupdated, and therefore by restoring the transaction information to a pre-update state, it is possible to make them consistent.

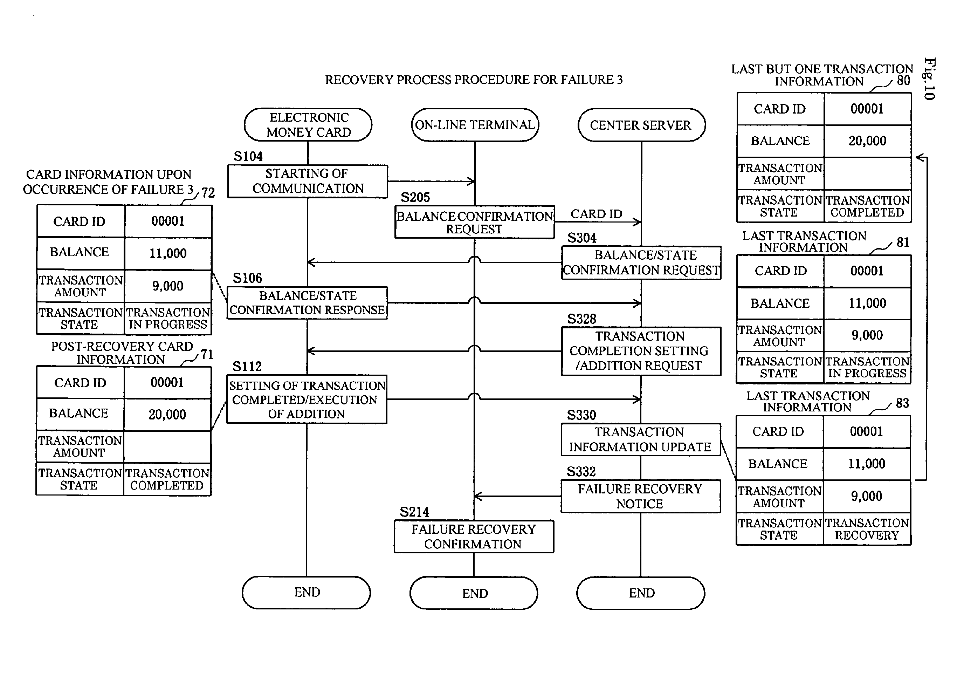

FIG. 10 is a flowchart for explaining a recovery process procedure for the case where failure 3 has occurred.

Steps 104 through 106 are the same as those for failure 2.

The center server 2 checks a combination of the transaction state transmitted from the electronic money card 7 and the transaction state of the transaction information 81 for the last session to find that the combination of the transaction states is (transaction in progress, transaction in progress), and it determines that the last processing session has been interrupted by failure 3 because the last transaction was a payment process.

If failure 3 has occurred, the center server 2 generates an addition command to add the amount that has been subtracted from the electronic money card 7 in the last session, and transmits it to the electronic money card 7 along with a transaction completion command (step 328).

The electronic money card 7 executes the addition command to add VALUE equivalent to the amount that has been subtracted in the last session, and sets the transaction state to "transaction completed". Then, it transmits to the center server 2 an addition completion notice indicating the addition process and the setting to "transaction completed" (step 112).

The above processing updates the card information from the card information 72 to the card information 71.

Upon receipt of the addition completion notice from the electronic money card 7, the center server 2 sets the transaction state of the transaction information 81 to "transaction recovery" as in the case of failure 2 to update the transaction information (step 330). As a result, the transaction information 80 for the last but one session is considered as the latest transaction information.

Next, the center server 2 transmits a failure recovery notice to the on-line terminal 5 (step 332), and based on this, the on-line terminal 5 confirms that recovery from the failure has been made (step 214).

Then, the payment process is performed again from the beginning after the recovery from failure 3.

As such, when failure 3 has occurred, the VALUE that has been subtracted at the time of failure occurrence is added to the electronic money card 7 to restore the balance of VALUE to the state it was in before the occurrence of failure, and also to restore the transaction information to the state it was in before the occurrence of failure.

Specifically, the subtraction is executed in the electronic money card 7 before the transaction information is established in the center server 2 (before the transaction information is updated to post-payment transaction information), and therefore it is possible to recover the state before the occurrence of failure by returning the subtracted VALUE to the electronic money card 7.

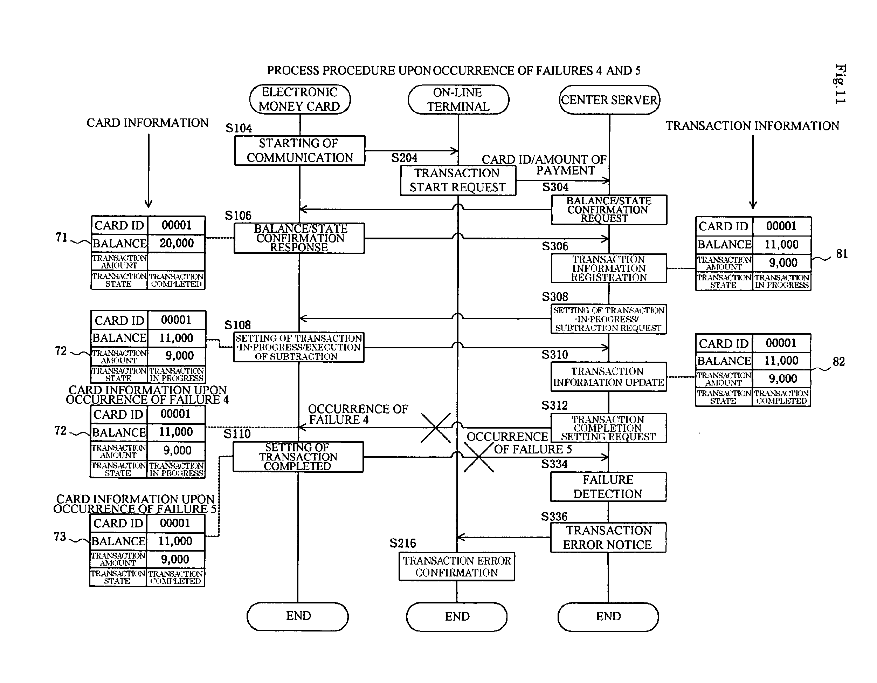

FIG. 11 is a flowchart for explaining a process procedure for cases where failures 4 and 5 have occurred.

Steps 104 through 310 are the same as those in the flowchart in FIG. 6. The center server 2 updates the transaction information to the transaction information 82 (step 310), and thereafter transmits a transaction completion command to the electronic money card 7 (step 312).

Thereafter, if failure 4 or 5 has occurred, the center server 2 detects that either of the failures has occurred (step 334), and issues a transaction error notice to the on-line terminal 5 (step 336).

Then, the on-line terminal 5 displays an error occurrence screen on the display device, which accompanies sound effects representing a transaction processing error (step 216).

When failure 4 has occurred, the card information is card information 72, whereas when failure 5 has occurred, it is card information 73. In addition, in either case, the transaction information is transaction information 82.

As a result, the combination of the transaction states is (transaction in progress, transaction completed) in the case of failure 4, and (transaction completed, transaction completed) in the case of failure 5.

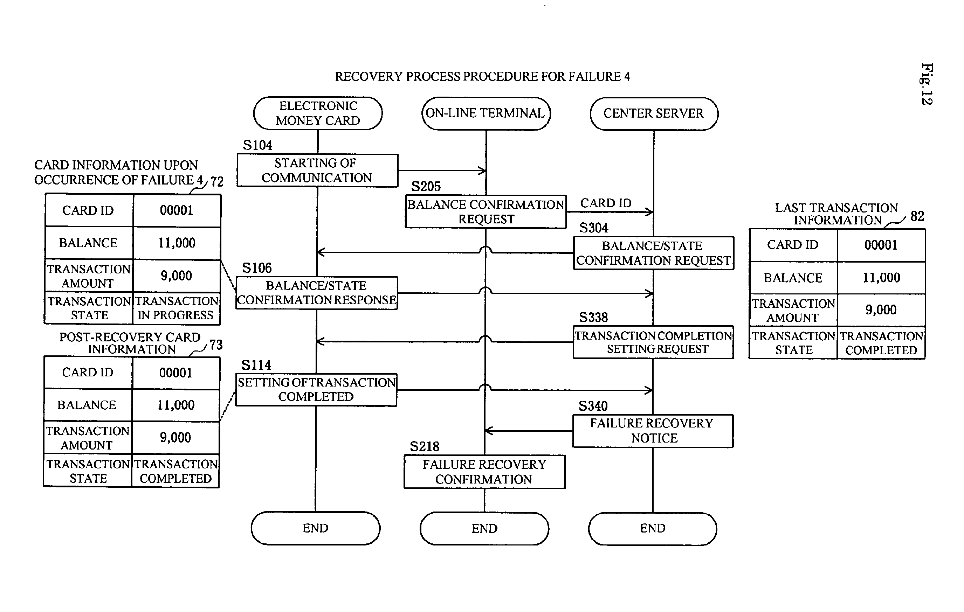

FIG. 12 is a flowchart for explaining a recovery process procedure for the case where failure 4 has occurred.

Steps 104 through 106 are the same as those in the case of failure 2.

The center server 2 checks a combination of a transaction state transmitted from the electronic money card 7 and a transaction state of transaction information 82 for the last session to find that the combination of the transaction states is (transaction in progress, transaction completed), and because the last transaction was a payment process, it is determined that the last processing session has been interrupted by failure 4.

When failure 4 has occurred, both the electronic money card 7 and the center server 2 have completed the subtraction process, but the transaction state of the card information 72 is inconsistent, and therefore failure recovery should be performed by resetting it from "transaction in progress" to "transaction completed".

To this end, the center server 2 issues a transaction completion setting request to the electronic money card 7 (step 338). The transaction completion setting request is performed by transmitting a transaction completion command to the electronic money card 7.

The electronic money card 7 receives and executes the transaction completion command, and sets the transaction state of the card information 72 to "transaction completed". As a result, the card information is updated from the card information 72 to the card information 73.

Then, the electronic money card 7 transmits a transaction completion notice to the center server 2 (step 114).

After receiving the transaction completion notice, the center server 2 transmits a failure recovery notice to the on-line terminal 5 (step 340), and the on-line terminal 5 receives it and confirms that the recovery from failure 4 has been made (step 218).

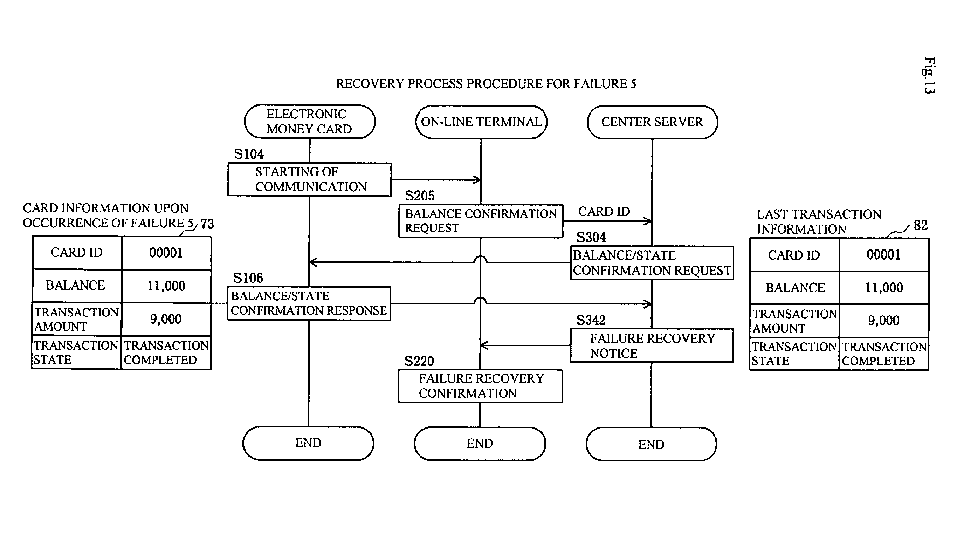

FIG. 13 is a flowchart for explaining a recovery process procedure for the case where failure 5 has occurred.

Steps 104 through 106 are the same as those in the case of failure 2.

The center server 2 checks a combination of a transaction state transmitted from the electronic money card 7 and a transaction state of transaction information 82 for the last session to find that the combination of the transaction states is (transaction completed, transaction completed), and because the last transaction was a payment process, it is determined that the last processing has been interrupted by failure 5.

When failure 5 has occurred, both the card information and the transaction information have been updated to a post- payment version, though the center server 2 has not yet confirmed that the card information was updated, and therefore it is not particularly necessary to perform a recovery process.

Accordingly, the center server 2 transmits a failure recovery notice to the on-line terminal 5 without performing any particular recovery process (step 342), and based on this, the on-line terminal 5 confirms that recovery from the failure has been made (step 220).

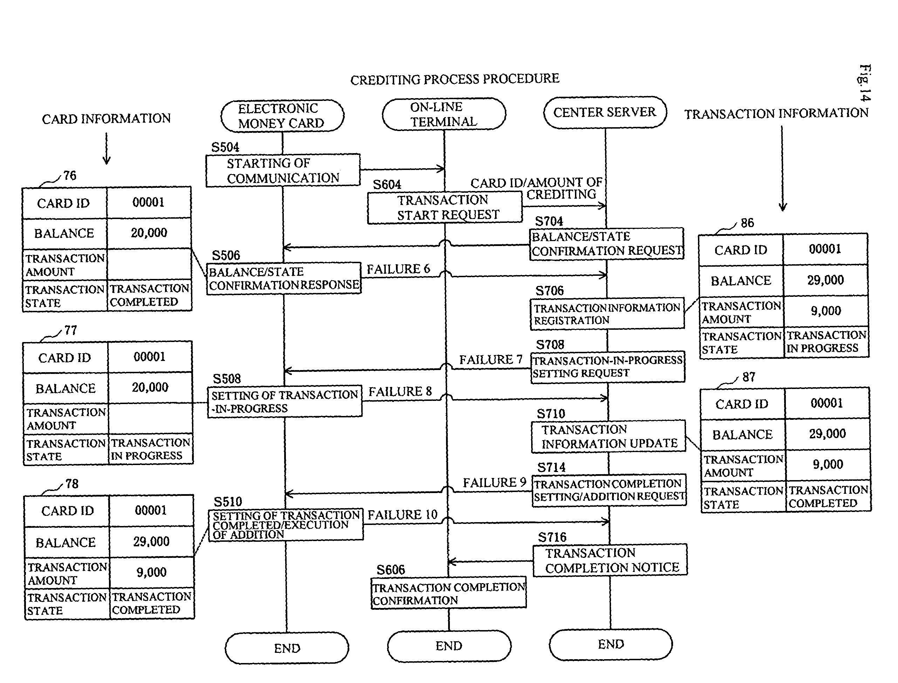

Next, flowcharts in FIGS. 14 through 20 are referenced to describe the procedure for a crediting process through the use of the electronic money card 7 and the recovery procedure for the case where any failure has occurred during crediting.

Here, a case where 9,000 yen is credited to an electronic money card 7 charged up with 20,000 yen is described by way of example.

FIG. 14 is a flowchart for explaining the procedure for a crediting process.

In the crediting process, the customer first hands 9,000 yen in cash to a person in charge at the affiliated store 102 to ask for crediting of 9,000 yen.

The person in charge receives 9,000 yen from the customer, and inputs 9,000 yen as the amount of crediting to the on-line terminal 5.

Then, a card confirmation screen is displayed on the display device of the on-line terminal 5, and the customer sets the electronic money card 7 in the reader/writer 5b in accordance with an instruction on the screen.

The electronic money card 7, when set in the on-line terminal 5, is driven by radio waves emitted from the reader/writer 5b in the on-line terminal 5 to start communicating with the on-line terminal 5 (step 504).

When the electronic money card 7 is connected to the on-line terminal 5, the center server 2 becomes capable of communicating with the electronic money card 7, and a communicating screen is displayed on the display device of the on-line terminal 5.

When the on-line terminal 5 starts communicating with the electronic money card 7, it reads a card ID from the electronic money card 7 and transmits it to the center server 2 along with the amount of crediting (step 604).

Upon receipt of these pieces of information, the center server 2 issues a balance/state confirmation request to the electronic money card 7 (step 704).

The electronic money card 7 receives it and provides a balance/state confirmation response (step 506).

Upon receipt of the balance/state confirmation response from the electronic money card 7, the center server 2 checks whether any failure has occurred in the last processing session, and if there has been any failure, recovery therefrom is made to continue the process. The failure recovery process will be described later, and here it is assumed that there has been no failure.

After confirming that there has been no failure in the last processing session, the center server 2 generates transaction information 86 concerning the processing and registers it with the transaction information database 46 (step 706).

The transaction information 86 contains a post-crediting balance, but the transaction state is set at "transaction in progress" and registration with the transaction information database 46 has not been established. That is, the center server 2 has not yet completed an addition process.

Next, the center server 2 issues a transaction-in-progress setting request to the electronic money card 7 (step 708).

Upon receipt of the transaction-in-progress setting request, the electronic money card 7 sets the transaction state to "transaction in progress", and transmits a transaction-in-progress setting notice to the center server 2 (step 508). As a result, card information 76 is updated to card information 77.

Upon receipt of the transaction-in-progress setting notice from the electronic money card 7, the center server 2 sets the transaction state to "transaction completed", thereby updating the transaction information 86 to transaction information 87 (step 710).

By setting the transaction state to "transaction completed", registration of the transaction information 87 with the transaction information database 46 is established, which means that the addition has been made in the center server 2.

Next, the center server 2 issues a transaction completion setting/addition request to the electronic money card 7 (step 714). This is performed by transmitting both an addition command to add the amount of crediting and a transaction completion command to the electronic money card 7.

The electronic money card 7 receives these commands and executes the addition command to increase the balance of VALUE by 9,000, and it also sets the transaction state to "transaction completed". Then, it transmits an addition completion notice indicating the addition process and the setting to "transaction completed" to the center server 2 (step 510).

The execution of the addition command and the transaction completion command updates the card information 77 to card information 78.

As shown in the drawing, the card information 78 contains a balance of VALUE of 29,000 yen and has its transaction state set at "transaction completed".

Upon receipt of the addition completion notice from the electronic money card 7, the center server 2 transmits a transaction completion notice to the on-line terminal 5 (step 716).

The on-line terminal 5 receives the transaction completion notice from the center server 2 to confirm that the process has been completed (step 606).

At this time, the on-line terminal 5 displays a crediting completion screen on the display device, which accompanies sound effects representing success in the process.

In the crediting process shown in FIG. 14, the parts where any failure might occur during the communication between the electronic money card 7 and the center server 2 are step 506 (failure 6), step 708 (failure 7), step 508 (failure 8), step 714 (failure 9) and step 510 (failure 10).

Note that although any failure might occur in step 704, processing for this case is the same as that for failure 6, and therefore the description thereof is omitted.

Described below are process procedures for cases where these failures 6 through 10 have occurred and recovery process procedures therefor.

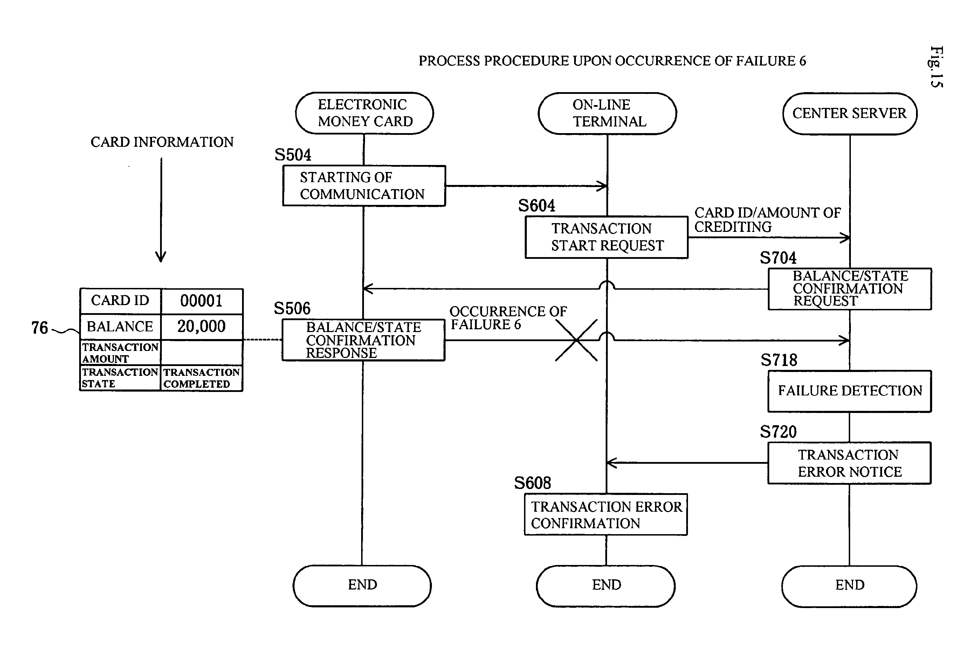

FIG. 15 is a flowchart for explaining a process procedure for the case where failure 6 has occurred.

Note that in the following description, steps corresponding to those in the flowchart in FIG. 15 are denoted by the same step numbers for simplification or omission of the description thereof.

First, if failure 6 has occurred when the electronic money card 7 transmits a balance of VALUE and a transaction state to the center server 2 (step 506), the center server 2 detects failure 6 (step 718).

Upon detection of failure 6, the center server 2 transmits to the on-line terminal 5 a transaction error notice indicating that a transaction process has failed (step 720).

The on-line terminal 5 receives the transaction error notice from the center server 2 to confirm that the processing has failed (step 608).

At this time, the on-line terminal 5 displays an error occurrence screen, which accompanies sound effects representing a transaction failure. The error occurrence screen gives a notice instructing to confirm the balance, with the result that a person in charge at the affiliated store 102 performs a balance confirmation process for the electronic money card 7.

Incidentally, when failure 6 has occurred, the card information 76 is left unprocessed, and because the transaction information has not yet been registered with the center server 2, it is not necessary to perform a recovery process. Accordingly, when failure 6 has occurred, the balance is confirmed without performing a recovery process. Therefore, the person in charge at the affiliated store 102 confirms the balance and thereafter performs the process again from the beginning.

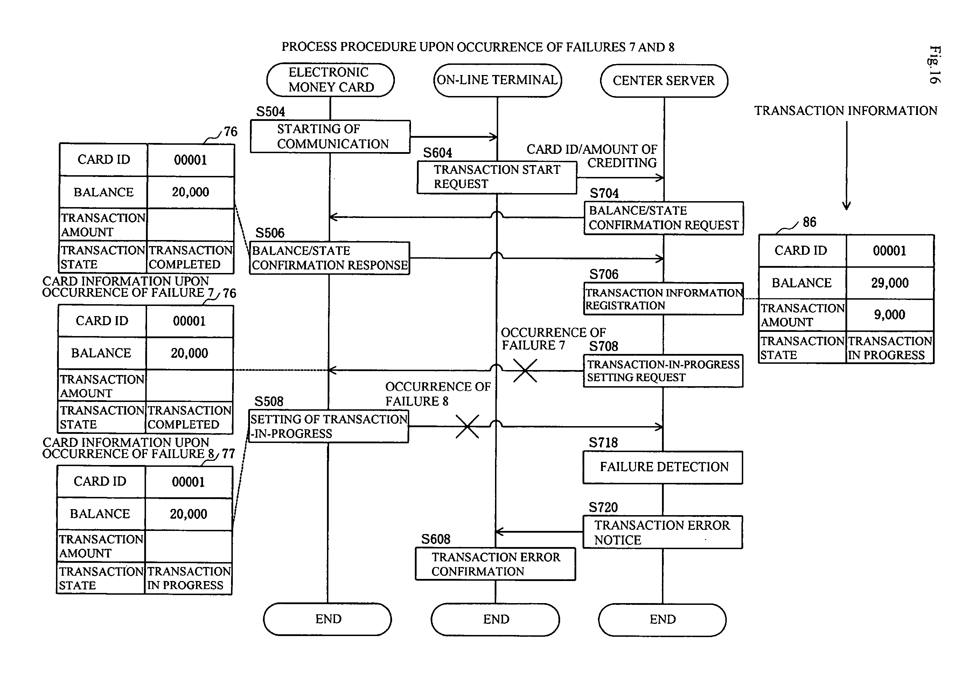

FIG. 16 is a flowchart for explaining a process procedure for cases where failures 7 and 8 have occurred.

If any failure has occurred in step 708 (failure 7) or step 508 (failure 8), the center server 2 detects it (step 718) and transmits a transaction error notice to the on-line terminal 5 (step 720).

The on-line terminal 5 receives the transaction error notice to confirm the error, and displays an error occurrence screen, which accompanies sound effects (step 608).

Here, which one of these failures 7 and 8 has occurred can be identified based on a combination of the transaction state of the card information and the transaction state of the transaction information.

Specifically, when failure 7 has occurred, the card information is card information 76, whereas when failure 8 has occurred, it is card information 77. In addition, the transaction information is transaction information 86 regardless of failure 7 or 8.

Therefore, the combination of the transaction state of the card information and the transaction state of the transaction information is (transaction completed, transaction in progress) if failure 7 has occurred, and (transaction in progress, transaction in progress) if failure 8 has occurred.

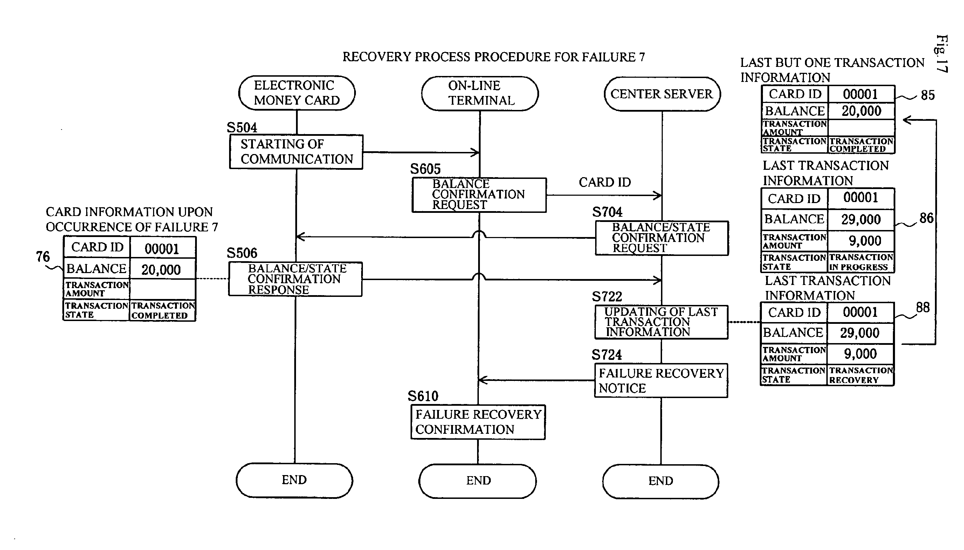

FIG. 17 is a flowchart for explaining a recovery process procedure for the case where failure 7 has occurred.

This process is started by a person in charge at the affiliated store 102 using the on-line terminal 5 to issue a request to confirm the balance of the electronic money card 7 in accordance with an instruction on an error occurrence screen.

The person in charge sets the electronic money card 7 in the reader/writer 5b to start communication between the electronic money card 7 and the on-line terminal 5 (step 504) (note that the electronic money card 7 is normally set in the on-line terminal 5 at the time of failure occurrence, and therefore the balance confirmation process is entered automatically), and issues a balance confirmation request to the center server 2, for example, by depressing a balance confirmation button provided on the on-line terminal 5 (step 605).

The center server 2 receives the balance confirmation request from the on-line terminal 5, and issues a balance/state confirmation request to the electronic money card 7 (step 704), and in response to this, the electronic money card 7 provides a balance/state confirmation response (step 506).

Next, the center server 2 checks a combination of a transaction state transmitted in the balance/state confirmation response from the electronic money card 7 and a transaction state of transaction information 86 for the last session.

The result is that the combination of the transaction states is (transaction completed, transaction in progress), and because the last processing session was a crediting process (which is recorded in the transaction information 86, though not shown in the drawing), the center server 2 determines that the last processing session has been interrupted by failure 7.

Then, the center server 2 sets the transaction state of the transaction information 86 to "transaction recovery" to update the transaction information 86 to transaction information 88.

The center server 2 considers any transaction information having its transaction state set at "transaction recovery" as invalid, and therefore transaction information 85 for the last but one session is revived as the latest transaction information.

In other words, the center server 2 performs failure recovery by updating the transaction information 86 for the last session to the transaction information 85 for the last but one session (step 722).

After updating the transaction information, the center server 2 transmits to the on-line terminal 5 a failure recovery notice indicating that failure recovery has been performed (step 724). The on-line terminal 5 receives it and confirms that recovery from the failure has been made (step 610).

Then, the person in charge at the affiliated store 102 confirms the balance, and thereafter performs the crediting process again from the beginning.

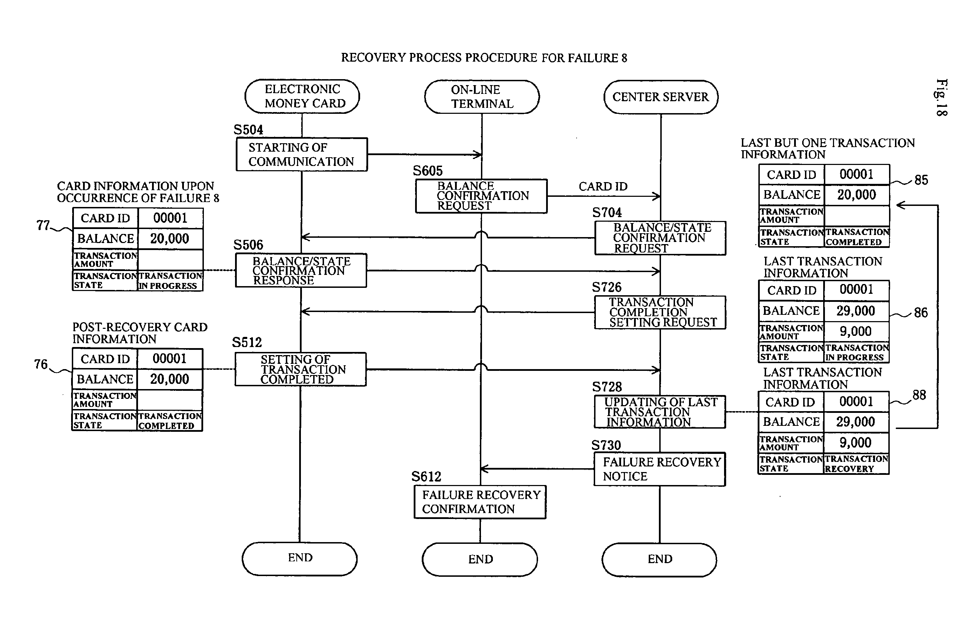

FIG. 18 is a flowchart for explaining a recovery process procedure for the case where failure 8 has occurred.

Steps 504 through 506 are the same as those for failure 7.

The center server 2 checks a combination of a transaction state transmitted from the electronic money card 7 and a transaction state of the transaction information 86 for the last session to find that the combination of the transaction states is (transaction in progress, transaction in progress), and because the last transaction was a crediting process, it is determined that the last processing session has been interrupted by failure 8.

When failure 8 has occurred, both the electronic money card 7 and the center server 2 have not completed the addition process, and therefore failure recovery should be performed by restoring the card information and the transaction information to the state they were in before the crediting process.

To this end, the center server 2 issues a transaction completion setting request to the electronic money card 7 (step 726). This request is performed by transmitting a transaction completion command to the electronic money card 7.

In response to this, the electronic money card 7 sets the transaction state to "transaction completed", and transmits a transaction completion setting notice to the center server 2 (step 512).

As a result, the card information is restored from card information 77 to card information 76.

Upon receipt of the transaction completion notice from the electronic money card 7, the center server 2 sets the transaction state of the transaction information 86 to "transaction recovery" to update it to transaction information 88 (step 728). As a result, the transaction information 88 becomes invalid transaction information, and transaction information 85 for the last but one session is revived as the latest transaction information.

Next, the center server 2 transmits a process recovery notice to the on-line terminal 5 (step 730), and based on this, the on-line terminal 5 confirms that recovery from the failure has been made (step 612).

Thereafter, a person in charge at the affiliated store 102 performs the crediting process again from the beginning.

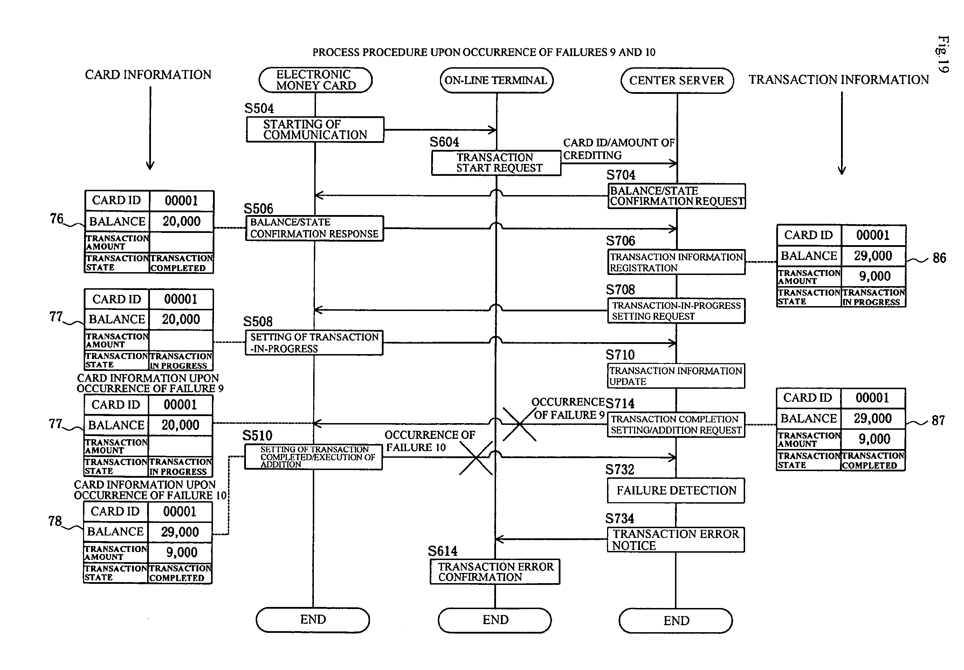

FIG. 19 is a flowchart for explaining process procedures for cases where failures 9 and 10 have occurred.

Steps 504 through 710 are the same as those in the flowchart in FIG. 14.

The center server 2 updates the transaction information to transaction information 87 (step 714), and thereafter transmits a transaction completion command and an addition command to the electronic money card 7 (step 714).

Thereafter, if failure 9 or 10 has occurred, the center server 2 detects any one of these failures has occurred (step 732), and issues a transaction error notice to the on-line terminal 5 (step 734).

The on-line terminal 5 displays an error occurrence screen on the display device, which accompanies sound effects representing a transaction processing error (step 614).

When failure 9 has occurred, the card information is card information 77, whereas when failure 10 has occurred, it is card information 78. In addition, in either case, the transaction information is transaction information 87.

As a result, the combination of the transaction states is (transaction in progress, transaction completed) in the case of failure 9, and (transaction completed, transaction completed) in the case of failure 10.

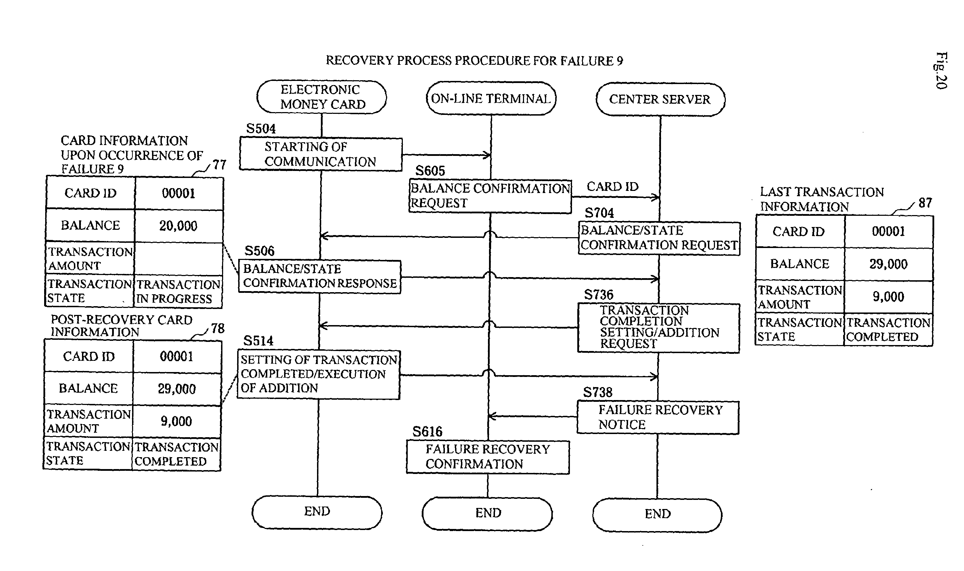

FIG. 20 is a flowchart for explaining a recovery process procedure for the case where failure 9 has occurred.

Steps 504 through 606 are the same as those in the case of failure 6.

The center server 2 checks a combination of a transaction state transmitted from the electronic money card 7 and a transaction state of transaction information 87 for the last session to find that the combination of the transaction states is (transaction in progress, transaction completed), and because the last transaction was a crediting process, it is determined that the last processing session has been interrupted by failure 9.

In the case of failure 9, the center server 2 has completed an addition process, but the electronic money card 7 has not yet completed an addition process, and therefore a recovery process is performed by causing the electronic money card 7 to perform an addition process.

First, the center server 2 reissues a transaction completion setting/addition request to the electronic money card 7 (step 736).

In response to this, the electronic money card 7 performs an addition process as well as setting the transaction state to "transaction completed", and it transmits an addition completion notice to the center server 2 (step 514). As a result, card information 77 is updated to card information 78.

After receiving the addition completion notice, the center server 2 transmits a failure recovery notice to the on-line terminal 5 (step 738), and the on-line terminal 5 receives it and confirms that recovery from failure 9 has been made (step 616).

Described next is a process for recovery from failure 10. In the case of failure 10, because both the electronic money card 7 and the center server 2 have completed the addition process and their transaction states are both set at "transaction completed", it is not necessary to perform a state recovery process.

Accordingly, in the case of failure 10, balance confirmation is performed without making failure recovery.

As described above, in the electronic money system 1, when performing a payment process, a subtraction process is performed in the electronic money card 7 (FIG. 6, step 108), and then in the center server 2 (FIG. 6, step 310), and when performing a crediting process, an addition process is performed in the center server 2 (FIG. 14, step 710), and then in the electronic money card 7 (FIG. 14, step 510).

Therefore, even if the balance of VALUE differs between the electronic money card 7 and the center server 2 due to a failure (failure 3, failure 9), it is still possible to perform a recovery process by performing an addition process on the electronic money card 7.

As such, in the case of performing a failure recovery, the electronic money card 7 is never processed by a subtraction process, and therefore the customer can use the electronic money card 7 with a sense of security.

Also, in the above example, failure recovery is performed in conjunction with balance confirmation, but the failure recovery might not be performed if neither the customer nor the person in charge at the affiliated store 102 is aware of occurrence of failure.

In the case of a payment process or a crediting process, before performing such a process, the center server 2 checks whether or not any failure has occurred in the last processing session, and therefore, even if failure recovery has not been performed in the last transaction, it is possible to perform the process after performing failure recovery in the current transaction.

Described next is a case where an electronic money card 7 on which failure recovery has not been performed (hereinafter, referred to as the "nonrecovered card") is used with the off-line terminal 6.

In the case of making a payment with the nonrecovered card via the off-line terminal 6, there are no particular limitations as to use. Even if any failure has occurred, the balance of VALUE stored in the nonrecovered card remains less than or equal to the balance of VALUE originally owned by the customer, and therefore no inconvenience may arise by reason of subtraction therefrom.

In addition, the center server 2 performs failure recovery based on transaction information, and therefore after using the nonrecovered card with the off-line terminal 6 for payment, it is still possible to set this card with an outstanding balance in the on-line terminal 5 to perform failure recovery.

On the other hand, in the case of crediting the nonrecovered card, any inconvenience may arise. Specifically, an upper limit is set for the balance of VALUE that can be stored in the electronic money card 7, and therefore if the nonrecovered card is credited, the balance of VALUE might exceed the upper limit.

For example, it is assumed that the upper limit for VALUE is fifty thousand yen. Further, it is assumed that the VALUE that is currently stored in the nonrecovered card is forty thousand yen, but five thousand yen will be added by making recovery from a failure.

If recovery from the failure is made after the customer credits the nonrecovered card with ten thousand yen to have a balance of VALUE of fifty thousand yen, then the balance of VALUE becomes fifty-five thousand yen, exceeding the upper limit.

Therefore, the off-line terminal 6 checks whether or not the electronic money card 7 is a nonrecovered card before crediting the electronic money card 7, and limits crediting if it is a nonrecovered card.

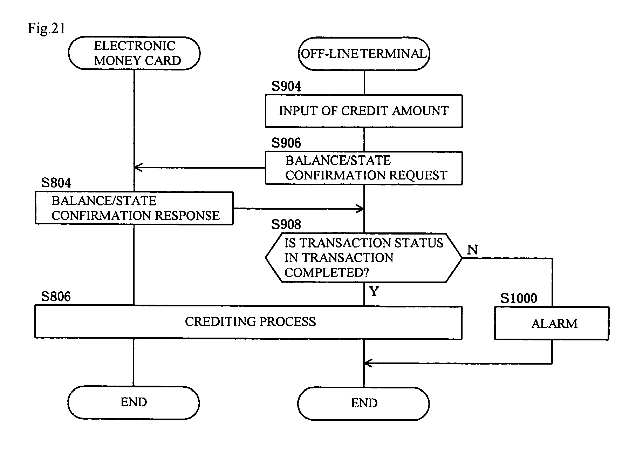

FIG. 21 is a flowchart for explaining the procedure for crediting the electronic money card 7 via the off-line terminal 6. Note that the off-line terminal 6 constitutes an arithmetic instruction input unit as described below.

It is assumed that the electronic money card 7 is set in the reader/writer of the off-line terminal 6.

First, a person in charge at the affiliated store 102 inputs the amount of crediting to the off-line terminal 6 (step 904). This corresponds to an addition amount acquisition means.

Then, the off·line terminal 6 issues a balance/state confirmation request to the electronic money card 7 (step 906), and in response to this, the electronic money card 7 provides a balance/state confirmation response to the off-line terminal 6 (step 804). As such, the center server 2 receives a transaction state from the electronic money card 7, which corresponds to a terminal flag reception means.

The off-line terminal 6 determines whether the transaction state received from the electronic money card 7 is "transaction completed" or "transaction in progress "(step 908).

If the transaction state is "transaction completed" (step 908; Y), the off-line terminal 6 generates an addition command and inputs it to the electronic money card 7 to perform a crediting process (step 806).

On the other hand, if the transaction state is "transaction in progress" (step 908; N), the off-line terminal 6 sounds an alarm without performing a crediting process (step 1000).

Such an off-line terminal 6 includes an addition instruction generation means and an addition instruction input means for limiting input to the electronic money card 7 when the transaction state is "transaction in progress".

As such, the off-line terminal 6 is capable of determining whether or not the electronic money card 7 is a nonrecovered card by checking the transaction state of the electronic money card 7, and if it is a nonrecovered card, limits the crediting process (in the present embodiment, the crediting process is not allowed at all).

Note that in the present embodiment, it is also possible that the amount of crediting for the nonrecovered card is limited.

Specifically, the case where the balance of VALUE stored in the electronic money card 7 becomes less than the balance of VALUE that is actually owned by the user due to a failure is when failure 3 or 9 has occurred.

In such a case, it is possible for the off-line terminal 6 to dynamically limit the upper bound of the amount that can be credited, allowing for the amount that might be added by failure recovery.

Specifically, when an addition process is performed in a recovery process based on card information concerning the electronic money card 7, the added amount is equivalent to the amount recorded in "transaction amount". Although the amount may be added to or subtracted from the balance of VALUE depending on the types of failures, the off-line terminal 6 can recognize at least that there is a possibility that the balance is added with the amount that may be added.

Therefore, the off-line terminal 6 sets the amount that is obtained by subtracting the above amount from the upper limit as the upper limit for the electronic money card 7.

While the foregoing description has been given with respect to an example of the present embodiment, various variations can be made.

If any failure has occurred, it is still possible to perform failure recovery so long as it is known at least whether the failure has occurred before or after an arithmetic operation has been performed in the electronic money card 7. Therefore, consider now conditions therefor.

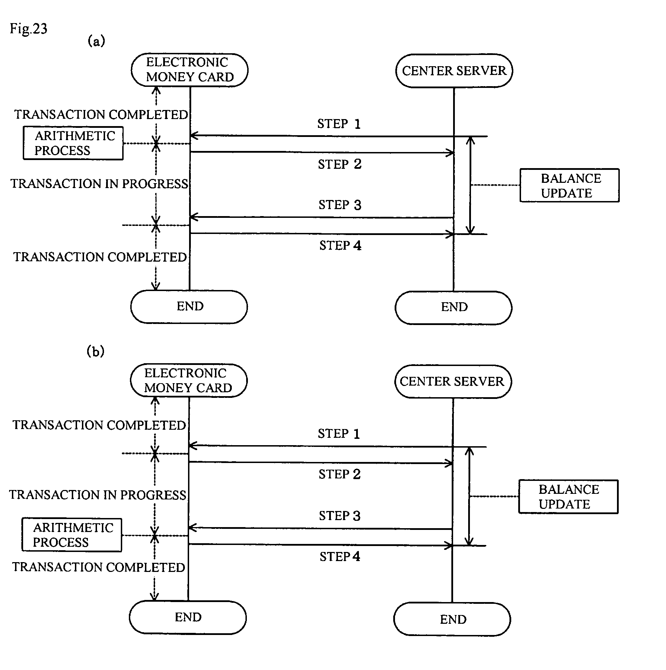

In the present embodiment, there are times to communicate in steps 1 to 4 as shown in FIG. 23(a).

Specifically, the center server 2 transmits a transaction-in-progress command in step 1, and receives a transaction-in-progress setting notice in step 2, and moreover it transmits a transaction completion command in step 3, and receives a transaction completion notice in step 4.

The times to transmit an arithmetic instruction to the electronic money card 7 are steps 1 and 3, and FIG. 23(a) shows the case where an arithmetic command is transmitted in step 1.

When any failure has occurred in step 2 or 3, the transaction state of the electronic money card 7 is "transaction in progress". That is, as long as it is known that the transaction state of the electronic money card 7 is "transaction in progress", it is possible to know that the failure has occurred after an arithmetic process has been performed in the electronic money card 7. Therefore, it is not always necessary to distinguish between steps 2 and 3.

On the other hand, when the transaction state of the electronic money card 7 is "transaction completed", it is not possible to identify whether the failure has occurred before the arithmetic process (step 1) or the failure has occurred after the arithmetic process (step 4). Therefore, the transaction state of the center server 2 is inverted (odd number of times) between steps 1 and 4, making it possible to discriminate between a failure in step 1 and a failure in step 4.

Here, inverting the transaction state means setting the transaction state such as "transaction completed" -> "transaction in progress", or "transaction in progress" -> "transaction completed".

With such a configuration, whether or not any arithmetic process has been performed in the electronic money card 7 can be determined based only on a combination of the transaction states of the electronic money card 7 and the center server 2.

Further, by updating the balance of VALUE stored in the center server 2 when inverting the transaction state in the center server 2, it is made possible to determine based on the transaction state whether the balance of VALUE stored in the center server 2 has been updated or not.

FIG. 23(b) shows the case where an arithmetic command is transmitted in step 3. In this case, when the transaction information of the electronic money card 7 is "transaction in progress", it is possible to know that the failure has occurred before the arithmetic process.

On the other hand, when the transaction information is "transaction completed", it is not possible to identify, based only on this, whether the failure has occurred before the arithmetic process (step 1) or the failure has occurred after the arithmetic process (step 4). Therefore, the transaction state on the side of the center server 2 is inverted between steps 1 and 4, making it possible to identify when the failure has occurred. Also, the balance of VALUE stored on the side of the center server 2 is updated at the time of inversion.

To summarize the above, an arithmetic command may be transmitted simultaneously when setting the transaction state of the electronic money card 7 to "transaction in progress" or "transaction completed", the transaction state of the center server 2 may be inverted after transmitting a transaction-in-progress command to the electronic money card 7 (step 1) but before receiving a transaction completion notice (step 4), and in addition, the balance of VALUE stored on the side of the center server 2 may be updated at the time of inversion.

Specifically, the center server 2 may transmit a transaction-in-progress command to invert the transaction state of the electronic money card 7. After confirming that the electronic money card 7 has executed it and the transaction state has been inverted to "transaction in progress", a transaction completion command may be transmitted to the electronic money card 7 to reset the transaction state of the electronic money card 7 to "transaction completed". An arithmetic command may be transmitted simultaneously when the transaction-in-progress command or the transaction completion command is transmitted. In a period after transmitting the transaction-in-progress command to the electronic money card 7 but before confirming that the transaction state of the electronic money card 7 has been reset to "transaction completed", the transaction state of the center server 2 may be inverted or reset, and at the same time, a balance update may be established in the center server 2.

Within the above scope, various modifications can be made to the electronic money system 1.

According to the above-described electronic money system 1, the following effects can be achieved.
(1) Based on a combination of the transaction states of the electronic money card 7 and the center server 2, it is possible to identify any failure that has occurred.
(2) Because the types of failures are identified based on combinations of the transaction states, it is possible to identify the types of failures in the electronic money system 1 in which the on-line terminal 5 and the off-line terminal 6 coexist (the electronic money card 7 and the center server 2 are not always consistent in terms of the balance of VALUE).
(3) In the case of a payment process, after subtraction in the electronic money card 7, transaction information of the center server 2 is updated, whereas in the case of a crediting process, after the transaction information is updated in the center server 2, an addition process is performed in the electronic money card 7, and therefore in either case, a recovery process for the electronic money card 7 can be performed by an addition process.
(4) In the case where processing in the electronic money card 7 has not been completed, the transaction state is set at "transaction in progress", and therefore the off-line terminal 6 can identify a nonrecovered card.
(5) The off-line terminal 6 has a limited capability of crediting the nonrecovered card, and therefore it is possible to prevent the electronic money card 7 from being credited with more than the limit of the balance of VALUE.

While the foregoing description has been given with respect to an example of the present embodiment, various modifications are possible.

For example, the on-line terminal 5 may be implemented by a personal computer capable of connecting to the Internet, which is installed in the customer's home. In such a case, even if the customer visits the affiliated store 102 without being aware that a failure has occurred during processing of the electronic money card 7 via communication at his/her home, it is still possible to recover from the failure by using the on-line terminal 5.

Also, in the present embodiment, the center server 2 transmits an addition command or a subtraction command to the electronic money card 7 and the electronic money card 7 executes the command to update the balance stored therein, but it is also possible that an arithmetic operation on the balance is performed in the center server 2.

In such a case, the center server 2 acquires the balance stored in the electronic money card 7 from the electronic money card 7, and performs an addition/subtraction process thereon to calculate the amount after the addition/subtraction process.

Then, the center server 2 transmits the calculated amount to the electronic money card 7, and the electronic money card 7 updates the balance stored therein to the amount received from the center server 2.

As such, the addition/subtraction process may be performed in the center server 2 or the electronic money card 7, or it is possible that the center server 2 performs one of the addition and subtraction operations and the electronic money card 7 performs the other operation, such that the addition is performed in the center server 2 and the subtraction is performed in the electronic money card 7.

In the case where the center server 2 transmits the addition/subtraction command to the electronic money card 7 and addition/subtraction is performed in the electronic money card 7, the addition/subtraction command constitutes amount change information.

In the case where the electronic money card 7 updates the amount based on a post-addition/subtraction amount calculated by the center server 2, the post-addition/subtraction amount transmitted to the electronic money card 7 by the center server 2 corresponds to the amount change information.

As such, in the case where the balance in the electronic money card 7 is increased/decreased by the amount change information transmitted by the center server 2, the VALUE processing section 7a constitutes an amount change means for performing an amount change process on the balance amount, based on the amount change information.

In addition, the center server 2 includes an amount change information transmission means for transmitting amount change information such as an arithmetic command or a post-arithmetic amount.

Further, the off-line terminal 6 constitutes an amount change information input unit.

Specifically, the off-line terminal 6 acquires the amount of crediting in step 904, which constitutes an increase amount acquisition means for acquiring an increase amount.

In addition, the off-line terminal 6 performs a crediting process in step 806, which constitutes an amount change information generation means for generating amount change information for yielding an increase of the monetary value corresponding to an inputted increase amount.

Furthermore, the off-line terminal 6 includes an amount change information input means for, if the transaction state of the electronic money card 7 is "transaction completed", inputting generated amount change information to the electronic money card 7 and, if "transaction in progress", limiting input of the amount change information.

## Claims

1. A monetary information processing server used in a monetary information processing system composed of a monetary terminal for storing monetary information representing a balance amount of a monetary value as electronic data, executing a predetermined arithmetic instruction to perform an arithmetic process on the balance amount, and storing a terminal flag selectable between an initial state and an inverted state, and the monetary information processing server for communicating with the monetary terminal, the server comprising:
balance reception means for receiving the balance amount from the monetary terminal;
request acquisition means for acquiring an arithmetic instruction transmission request to the monetary terminal;
terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state;
arithmetic instruction transmission means for, when the inversion instruction or the reset instruction is transmitted to the monetary terminal, transmitting the arithmetic instruction;
server flag setting means for inverting or resetting a server flag in a period since the inversion instruction has been transmitted to the monetary terminal until the terminal flag is confirmed as having been reset; and
balance updating means for updating the received balance amount as the server flag is inverted or reset.

2. The monetary terminal processing server according to claim 1, comprising:
terminal flag reception means for, when a failure has occurred during communication with the monetary terminal, receiving a state of the terminal flag set in the monetary terminal at the time of occurrence of the failure; and
recovery means for determining whether the failure has occurred before or after the arithmetic process has been executed in the monetary terminal, based on the received state of the terminal flag and the server flag set at the time of occurrence of the failure, and performing a recovery process for the failure in accordance with the determination.

3. The monetary terminal processing server according to claim 2,
wherein when a subtraction instruction is transmitted as the arithmetic instruction, the balance updating means updates the balance amount after confirming that the subtraction instruction has been executed in the monetary terminal, and when an addition instruction is transmitted as the arithmetic instruction, the arithmetic instruction transmission means transmits the addition instruction after the balance amount has been updated, and
wherein when determined that the failure has occurred after the subtraction instruction has been executed in the monetary terminal but before the balance amount is updated, the recovery means performs the recovery process by adding an amount corresponding to the subtraction to the monetary terminal, and when determined that the failure has occurred after the balance amount has been updated but before the addition instruction is executed in the monetary terminal, the recovery means performs the recovery process by adding an amount corresponding to the update to the monetary terminal.

4. A monetary information processing method performed by a monetary information processing server used in a monetary information processing system composed of a monetary terminal for storing monetary information representing a balance amount of a monetary value as electronic data, executing a predetermined arithmetic instruction to perform an arithmetic process on the balance amount, and storing a terminal flag selectable between an initial state and an inverted state, and the monetary information processing server for communicating with the monetary terminal,
wherein the monetary information processing server includes balance reception means, request acquisition means, terminal flag setting means, arithmetic instruction transmission means, server flag setting means and balance updating means, and
wherein the method comprises:
a balance reception step performed by the balance reception means for receiving the balance amount from the monetary terminal;
a request acquisition step performed by the request acquisition means for acquiring an arithmetic instruction transmission request to the monetary terminal;
a terminal flag setting step performed by the terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state;
an arithmetic instruction transmission step performed by the arithmetic instruction transmission means for, when the inversion instruction or the reset instruction is transmitted to the monetary terminal, transmitting the arithmetic instruction;
a server flag setting step performed by the server flag setting means for inverting or resetting a server flag in a period since the inversion instruction has been transmitted to the monetary terminal until the terminal flag is confirmed as having been reset; and
a balance updating step performed by the balance updating means for updating the received balance amount as the server flag is inverted or reset.

5. A monetary terminal, wherein a monetary terminal processing server of claim 1 transmits an arithmetic instruction, the terminal comprising:
monetary information storage means for storing monetary information representing a balance amount of a monetary value as electronic data;
arithmetic means for performing an arithmetic process on the balance amount by executing a predetermined arithmetic instruction;
terminal flag storage means for holding a terminal flag selectable between an initial state and an inverted state; and
flag instruction execution means for executing an inversion instruction transmitted from the monetary terminal processing server to set the stored terminal flag from the initial state to the inverted state, and executing a reset instruction transmitted from the monetary terminal processing server to reset the stored terminal flag from the inverted state to the initial state.

6. An arithmetic instruction input unit for inputting the addition instruction to a monetary terminal of claim 5, comprising:
addition amount acquisition means for acquiring an addition amount;
addition instruction generation means for generating an addition instruction to add a monetary value equivalent to the acquired addition amount;
terminal flag reception means for receiving a terminal flag stored in the terminal flag storage means from the monetary terminal; and
addition instruction input means for, when the terminal flag is in an initial state, inputting the generated addition instruction to the monetary terminal, and when the terminal flag is in an inverted state, limiting input of the addition instruction to the monetary terminal.

7. A monetary information processing server used in a monetary information processing system composed of a monetary terminal for storing monetary information representing a balance amount of a monetary value as electronic data, performing an amount change process on the balance amount based on predetermined amount change information, and storing a terminal flag selectable between an initial state and an inverted state, and the monetary information processing server for communicating with the monetary terminal, the server comprising:
balance reception means for receiving the balance amount from the monetary terminal;
request acquisition means for acquiring an amount change information transmission request to the monetary terminal;
terminal flag setting means for transmitting to the monetary terminal an inversion instruction to invert the terminal flag to the inverted state, and after confirming that the terminal flag has been inverted to the inverted state in the monetary terminal, transmitting a reset instruction to reset the terminal flag to the initial state;
amount change information transmission means for, when the inversion instruction or the reset instruction is transmitted to the monetary terminal, transmitting amount change information requested by the acquired transmission request;
server flag setting means for inverting or resetting a server flag in a period since the inversion instruction has been transmitted to the monetary terminal until the terminal flag is confirmed as having been reset; and
balance updating means for updating the received balance amount as the server flag is inverted or reset.

8. The monetary terminal processing server according to claim 7, comprising:
terminal flag reception means for, when a failure has occurred during communication with the monetary terminal, receiving a state of the terminal flag set in the monetary terminal at the time of occurrence of the failure; and
recovery means for determining whether the failure has occurred before or after the amount change process has been executed in the monetary terminal, based on the received state of the terminal flag and the server flag set at the time of occurrence of the failure, and performing a recovery process for the failure in accordance with the determination.

9. The monetary terminal processing server according to claim 8,
wherein when amount change information for decrease is transmitted as the amount change information, the balance updating means updates the balance amount after confirming that the amount change process has been executed in the monetary terminal, and when amount change information for addition is transmitted as the amount change information, the amount change information transmission means transmits the amount change information after the balance amount has been updated, and
wherein when determined that a failure has occurred after an amount change process for decrease has been executed in the monetary terminal but before the balance amount is updated, the recovery means performs the recovery process by adding an amount corresponding to the decrease to the monetary terminal, and when determined that a failure has occurred after the balance amount has been updated but before an amount change process for increase is executed in the monetary terminal, the recovery means performs the recovery process by adding an amount corresponding to the update to the monetary terminal.

10. An information processing method performed by a monetary information processing server used in a monetary information processing system composed of a monetary terminal for storing monetary information representing a balance amount of a monetary value as electronic data, performing an amount change process on the balance amount based on predetermined amount change information, and storing a terminal flag selectable between an initial state and an inverted state, and the monetary information processing server for communicating with the monetary terminal,
wherein the monetary information processing server includes balance reception means, request acquisition means, terminal flag setting means, amount change information transmission means, server flag setting means and balance updating means, and
wherein the method comprises:
a balance reception step performed by the balance reception means for receiving the balance amount from the monetary terminal;
a request acquisition step performed by the request acquisition means for acquiring amount change information transmission request to the monetary terminal;
a terminal flag setting step performed by the terminal flag setting means for transmitting to the monetary terminal an inversion instruction to invert the terminal flag to the inverted state, and for, after confirming that the terminal flag has been inverted to the inverted state in the monetary terminal, transmitting a reset instruction to reset the terminal flag to the initial state;
an amount change information transmission step performed by the amount change information transmission means for, when the inversion instruction or the reset instruction is transmitted to the monetary terminal, transmitting amount change information requested by the acquired transmission request;
a server flag setting step performed by the server flag setting means for inverting or resetting a server flag in a period since the inversion instruction has been transmitted to the monetary terminal until the terminal flag is confirmed as having been reset; and
a balance updating step performed by the balance updating means for updating the received balance amount as the server flag is inverted or reset.

11. A monetary terminal, wherein a monetary terminal processing server of claim 7 transmits amount change information, the terminal comprising:
monetary information storage means for storing monetary information representing a balance amount of a monetary value as electronic data;
amount change means for performing an amount change process on the balance amount based on predetermined amount change information;
terminal flag storage means for holding a terminal flag selectable between an initial state and an inverted state; and
flag instruction execution means for executing an inversion instruction transmitted from the monetary terminal processing server to set the stored terminal flag from the initial state to the inverted state, and executing a reset instruction transmitted from the monetary terminal processing server to reset the stored terminal flag from the inverted state to the initial state.

12. An amount change information input unit for inputting amount change information for increasing the balance amount to a monetary terminal of claim 11, comprising:
increase amount acquisition means for acquiring an increase amount;
amount change information generation means for generating amount change information for increasing a monetary value by the acquired increase amount;
terminal flag reception means for receiving a terminal flag stored in the terminal flag storage means from the monetary terminal; and
amount change information input means for, when the terminal flag is in an initial state, inputting the generated amount change information to the monetary terminal, and when the terminal flag is in an inverted state, limiting
input of the amount change information to the monetary terminal.
